# EUROPEAN PATENT SPECIFICATION

(11) **EP 4 283 960 B1**
(45) Date of publication and mention of the grant of the patent: **25.06.2025**
(21) Application number: 23733197.0
(22) Date of filing: 30.03.2023
(51) Int. Cl.: H04M 1/02, G09F 11/00, G09F 11/32, G09F 9/30, H04M 1/18

(54) **ELECTRONIC DEVICE COMPRISING STRUCTURE FOR PREVENTING INTRODUCTION OF FOREIGN MATTER**
ELEKTRONISCHE VORRICHTUNG MIT STRUKTUR ZUR VERHINDERUNG DES EINDRINGENS VON FREMDKÖRPERN
DISPOSITIF ÉLECTRONIQUE COMPRENANT UNE STRUCTURE EMPÊCHANT L'INTRODUCTION DE CORPS ÉTRANGERS

(30) Priority: 01.04.2022 KR 20220041245; 28.06.2022 KR 20220079071
(43) Date of publication of application: 29.11.2023
(73) Proprietor: Samsung Electronics Co., Ltd., Suwon-si, Gyeonggi-do 16677 (KR)
(72) Inventor: SHIN, Moonchul, Suwon-si, Gyeonggi-do 16677 (KR); KANG, Youngmin, Suwon-si, Gyeonggi-do 16677 (KR); YOON, Yeonggyu, Suwon-si, Gyeonggi-do 16677 (KR); CHO, Joongyeon, Suwon-si, Gyeonggi-do 16677 (KR); CHOI, Junyoung, Suwon-si, Gyeonggi-do 16677 (KR); YOON, Byounguk, Suwon-si, Gyeonggi-do 16677 (KR); LEE, Junghyeob, Suwon-si, Gyeonggi-do 16677 (KR); CHO, Sunggun, Suwon-si, Gyeonggi-do 16677 (KR)
(74) Representative: Gulde & Partner
(86) International application number: PCT/KR2023/004285
(87) International publication number: WO 2023/191546

(56) References cited:
- EP-A1- 3 812 877
- WO-A1-2021/132744
- CN-A- 112 233 558
- KR-A- 20160 047 100
- KR-A- 20160 099 998
- KR-A- 20210 073 194
- US-A1- 2021 181 800
- US-B2- 11 243 566
- US-B2- 11 625 074

## Description

### [Technical Field]

Various embodiments of the present disclosure relate to an electronic device including a structure for preventing foreign substances.

### [Background Art]

A slidable electronic device may include a slidable housing, and a display disposed in the housing. The slidable electronic device may have a display having a display area that may be expanded or contracted in accordance with a sliding motion of the housing.

Electronic devices having a slidable housing are known from US 2021/181800 A1 and US 11 243 566 B2, wherein the latter includes a fiber structure for preventing and/or reducing infiltration of foreign matter. EP 3 812 877 Al discloses a similar electronic device with a dustproof structure for the same purpose.

### [Disclosure]

### [Technical Problem]

The slidable electronic device may use an operation method using a rack-pinion structure to slide the housing. The rack-pinion structure may include a drive motor, a rack gear, and a pinion gear. In the rack-pinion structure, the pinion gear may be connected to the drive motor and rotated by a rotation of the motor, and the rack gear may be rectilinearly slid by a rotation of the pinion gear. The housing in which the rack gear is disposed may be slid by the rectilinear sliding motion of the rack gear.

The slidable electronic device using the rack-pinion structure may have a structure in which the interlocking between the rack and the pinion gear affects driving quality. Therefore, in case that foreign substances are introduced into the rack or the pinion gear, a driving defect and a deterioration in driving performance may occur. In case that foreign substances are inserted into the rack or the pinion gear, the foreign substances are attached to grease applied to improve driving performance and are not easily separated. Therefore, it may be important to block the inflow of the foreign substances.

At least a part of a pinion gear shaft of the rack-pinion structure needs to be disposed on one surface of the rack gear, and the pinion gear shaft needs to be movable. For this reason, it may be difficult to use a simple sealing structure to prevent the inflow of foreign substances. Even though a compression member such as a sponge is constituted to surround the gear shaft to prevent the inflow of foreign substances, there exists a space into which foreign substances are introduced. Further, dust may be generated because of friction between a surface of the compression member and the gear shaft. Therefore, there may be a need for a foreign substance inflow blocking structure that prevents foreign substances from being introduced into the rack-pinion structure and has low frictional resistance so that the rack gear may perform a rectilinear sliding motion.

An electronic device including a structure for preventing foreign substances according to various embodiments of the present disclosure may provide a constitution capable of preventing foreign substances from being introduced into a rack gear and a pinion gear and enabling the rack gear to perform a rectilinear sliding motion.

### [Technical Solution]

The invention is defined by the appended claims. The description that follows is subjected to this limitation. Any disclosure lying outside the scope of said claims is only intended for illustrative as well as comparative purposes.

### [Advantageous Effects]

The electronic device including a structure for preventing foreign substances according to various embodiments of the present disclosure may provide the structure capable of allowing the rack gear to perform the rectilinear sliding motion and prevent foreign substances from being introduced into the rack gear and the pinion gear.

### [Description of Drawings]

FIG. 1 is a block diagram of an electronic device in a network environment according to various embodiments.
FIGS. 2A and 2B are views illustrating front and rear surfaces of the electronic device in a slide-in state according to various embodiments of the present disclosure.
FIGS. 3A and 3B are views illustrating the front and rear surfaces of the electronic device in a slide-out state according to various embodiments of the present disclosure.
FIG. 4 is an exploded perspective view of the electronic device according to various embodiments of the present disclosure.
FIG. 5A is a cross-sectional view of the electronic device according to various embodiments of the present disclosure when viewed along line 5a-5a in FIG. 2A.
FIG. 5B is a cross-sectional view of the electronic device according to various embodiments of the present disclosure when viewed along line 5b-5b in FIG. 3A.
FIG. 6 is an exploded perspective view of the electronic device according to various embodiments of the present disclosure.
FIGS. 7A and 7B are views illustrating front and rear surfaces of a part of the electronic device in the slide-in state according to various embodiments of the present disclosure.
FIGS. 8A and 8B are views illustrating the front and rear surfaces of a part of the electronic device in the slide-out state according to various embodiments of the present disclosure.
FIG. 9 is an exploded perspective view illustrating a foreign substance blocking mechanism, a rack gear, and a rack cover according to various embodiments of the present disclosure.
FIG. 10 is a perspective view illustrating the foreign substance blocking mechanism and a pinion gear according to various embodiments of the present disclosure.
FIGS. 11A and 11B are views illustrating the foreign substance blocking mechanism according to various embodiments of the present disclosure.
FIGS. 12A and 12B are views illustrating a first blocking mechanism disposed on the rack cover and a second blocking mechanism disposed on the rack gear according to various embodiments of the present disclosure.
FIG. 13 is a view illustrating the first blocking mechanism and the second blocking mechanism according to various embodiments of the present disclosure.
FIG. 14 is a view illustrating the first blocking mechanism and the pinion gear according to various embodiments of the present disclosure.
FIG. 15 is a view illustrating an arrangement of blocking members according to the embodiment of the present disclosure.
FIG. 16 is a view illustrating an arrangement of blocking members according to another embodiment of the present disclosure.
FIGS. 17A and 17B are views illustrating an arrangement of blocking members according to still another embodiment of the present disclosure.

### [Mode for Disclosure]

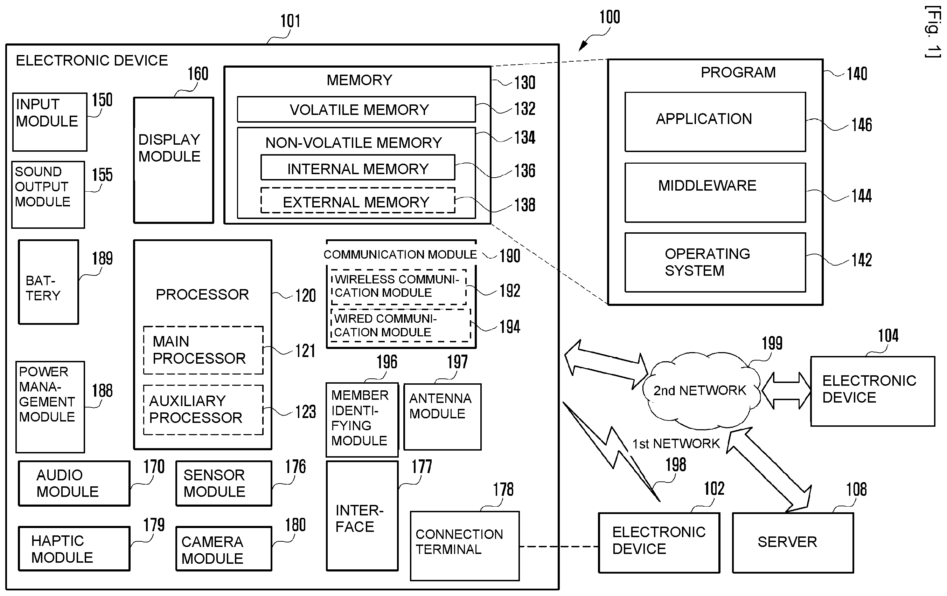

FIG. 1 is a block diagram illustrating an electronic device in a network environment according to various embodiments. Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter(mm) Wave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

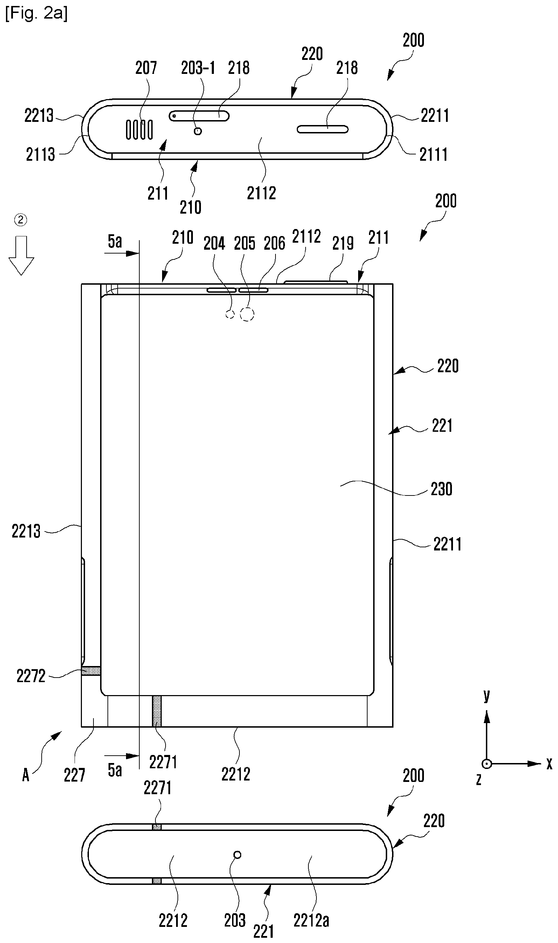

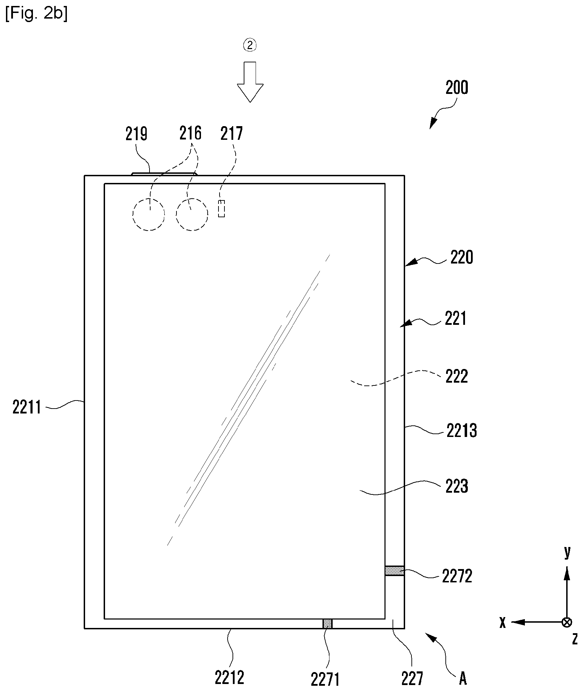

FIGS. 2A and 2B are views illustrating front and rear surfaces of the electronic device in a slide-in state according to various embodiments of the present disclosure.

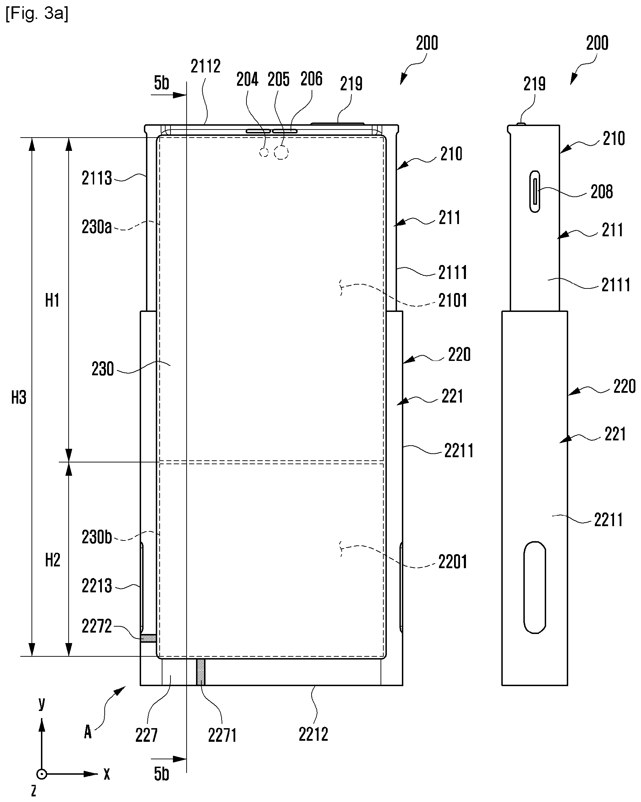

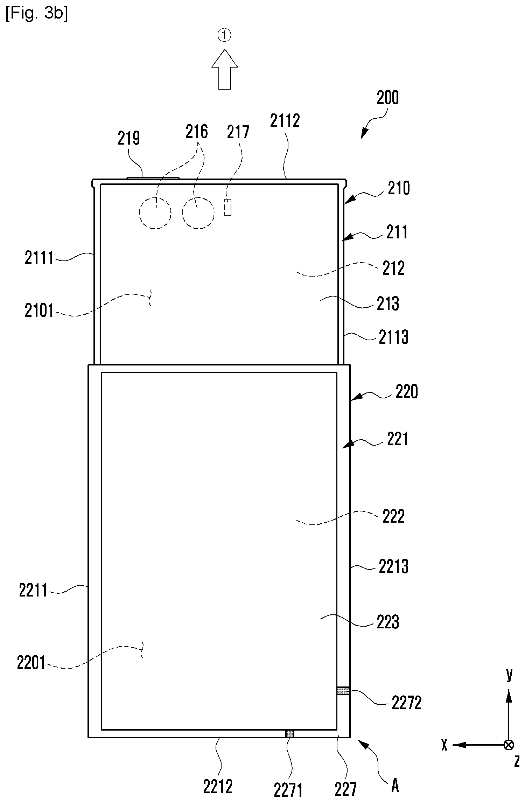

FIGS. 3A and 3B are views illustrating the front and rear surfaces of the electronic device in a slide-out state according to various embodiments of the present disclosure.

An electronic device 200 in FIGS. 2A to 3B may further include another embodiment of the electronic device at least partially similar to the electronic device 101 in FIG. 1.

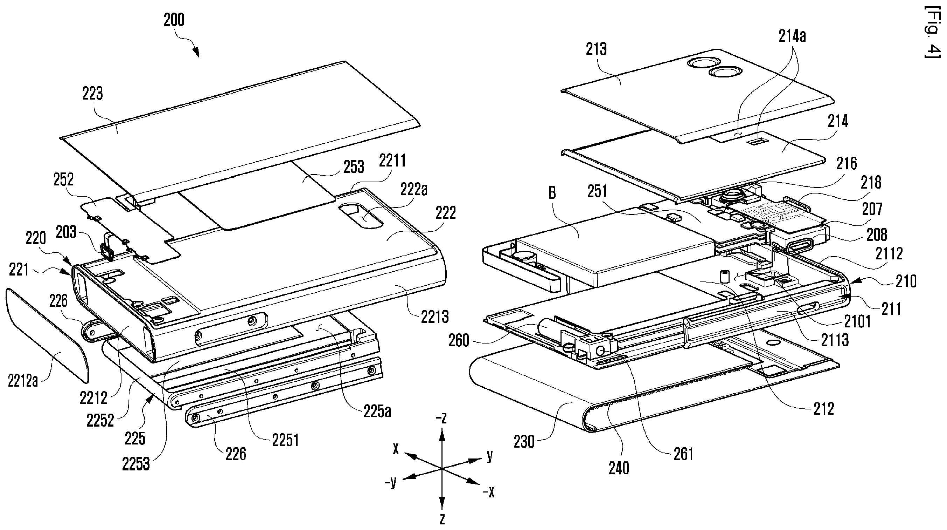

With reference to FIGS. 2A to 3B, the electronic device 200 may include: a base housing 220 (e.g., a fixed part, or a base part); a movable housing 210 (e.g., a movable part, or slidable housing) coupled to the base housing 220 and constituted to be slidable in a designated direction (e.g., Direction ① or Direction ②) (e.g., ± y-axis directions); and a flexible display 230 (e.g., an expandable display or a stretchable display) disposed to be supported by at least a part of the movable housing 210 and at least a part of the base housing 220. According to one embodiment, the electronic device 200 may be disposed such that the movable housing 210 slides out in a first direction (Direction ①) or slides in a second direction (Direction ②) opposite to the first direction (Direction ①) based on the base housing 220 gripped by a user. According to one embodiment, the state may switch to the slide-in state as at least a part of the movable housing 210 including a first space 2101 is accommodated in a second space 2201 of the base housing 220. According to one embodiment, the electronic device 200 may include a bendable member (or a bendable support member) (e.g., a bendable member 240 in FIG. 4) (e.g., an articulated hinge module or a multi-bar assembly) that defines at least partially the same plane as at least a part of the movable housing 210 in the slide-out state and is at least partially accommodated in the second space 2201 of the base housing 220 in the slide-in state. According to one embodiment, in the slide-in state, at least a part of the flexible display 230 may be disposed to be supported by the bendable member (e.g., the bendable member 240 in FIG. 4) and accommodated in the internal space 2201 of the base housing 220 without being visible from the outside. According to one embodiment, at least a part of the flexible display 230 may be disposed to be visible from the outside while being supported by the bendable member (e.g., the bendable member 240 in FIG. 4) that defines at least partially the same plane as the movable housing 210 in the slide-out state.

According to various embodiments, the electronic device 200 may include a movable housing 210 including a first lateral member 211, and a base housing 220 including a second lateral member 221. According to one embodiment, the first lateral member 211 may include: a first side surface 2111 having a first lateral length in the first direction (e.g., the y-axis direction); a second side surface 2112 extending in a substantially perpendicular direction (e.g., an x-axis direction) from the first side surface 2111 and having a second lateral length shorter than the first lateral length; and a third side surface 2113 extending substantially in parallel with the first side surface 2111 from the second side surface 2112 and having the first lateral length. According to one embodiment, the first lateral member 211 may be at least partially made of a conductive material (e.g., metal). In any embodiment, the first lateral member 211 may be made of a combination of a conductive material and a non-conductive material (e.g., polymer). According to one embodiment, the movable housing 210 may include a first support member 212 extending from at least a part of the first lateral member 211 to at least a part of the first space 2101. According to one embodiment, the first support member 212 may be integrated with the first lateral member 211. In any embodiment, the first support member 212 may be constituted separately from the first lateral member 211 and structurally coupled to the first lateral member 211.

According to various embodiments, the second lateral member 221 may include: a fourth side surface 2211 at least partially corresponding to the first side surface 2111 and having a third length; a fifth side surface 2212 extending substantially in parallel with the second side surface 2112 from the fourth side surface 2211 and having a fourth length shorter than the third length; and a sixth side surface 2213 extending from the fifth side surface 2212 so as to correspond to the third side surface 2113 and having the third length. According to one embodiment, the second lateral member 221 may be at least partially made of a conductive material (e.g., metal). In any embodiment, the second lateral member 221 may be made of a combination of a conductive material and a non-conductive material (e.g., polymer). According to one embodiment, at least a part of the second lateral member 221 may include a second support member 222 extending to at least a part of the second space 2201 of the base housing 220. According to one embodiment, the second support member 222 may be integrated with the second lateral member 221. In any embodiment, the second support member 222 may be constituted separately from the second lateral member 221 and structurally coupled to the second lateral member 221.

According to various embodiments, the first side surface 2111 and the fourth side surface 2211 may be slidably coupled to each other. According to one embodiment, the third side surface 2113 and the sixth side surface 2213 may be slidably coupled to each other. According to one embodiment, in the slide-in state, the first side surface 2111 may overlap the fourth side surface 2211, such that the first side surface 2111 may be disposed to be substantially invisible from the outside. According to one embodiment, in the slide-in state, the third side surface 2113 may overlap the sixth side surface 2213, such that the third side surface 2113 may be disposed to be substantially invisible from the outside. In any embodiment, in the slide-in state, at least a part of the first side surface 2111 and at least a part of the third side surface 2113 may be disposed to be at least partially visible from the outside. According to one embodiment, in the slide-in state, the first support member 212 may overlap the second support member 222, such that the first support member 212 may be disposed to be substantially invisible from the outside. In any embodiment, in the slide-in state, a part of the first support member 212 may overlap the second support member 222, such that the part of the first support member 212 may be disposed to be invisible from the outside, and the remaining part of the first support member 212 may be disposed to be visible from the outside.

According to various embodiments, the electronic device 200 may include a first rear surface cover 213 disposed on the rear surface of the electronic device 200 and coupled to the movable housing 210. According to one embodiment, the first rear surface cover 213 may be disposed through at least a part of the first support member 212. In any embodiment, the first rear surface cover 213 may be integrated with the first lateral member 211. According to one embodiment, the first rear surface cover 213 may be made of polymer, coated or colored glass, ceramic, metal (e.g., aluminum, stainless steel (STS), or magnesium), or a combination of at least two of these materials. In any embodiment, the first rear surface cover 213 may extend to at least a part of the first lateral member 211. In any embodiment, at least a part of the first support member 212 may be substituted with the first rear surface cover 213.

According to various embodiments, the electronic device 200 may include a second rear surface cover 223 disposed on the rear surface of the electronic device 200 and coupled to the base housing 220. According to one embodiment, the second rear surface cover 223 may be disposed through at least a part of the second support member 222. In any embodiment, the second rear surface cover 223 may be integrated with the second lateral member 221. According to one embodiment, the second rear surface cover 223 may be made of polymer, coated or colored glass, ceramic, metal (e.g., aluminum, stainless steel (STS), or magnesium), or a combination of at least two of these materials. In any embodiment, the second rear surface cover 223 may extend to at least a part of the second lateral member 221. In any embodiment, at least a part of the second support member 222 may be substituted with the second rear surface cover 223.

According to various embodiments, the electronic device 200 may include the flexible display 230 disposed to be supported by at least a part of the movable housing 210 and at least a part of the base housing 220. According to one embodiment, the flexible display 230 may include: a first part 230a (e.g., a planar portion) constituted to be always visible from the outside; and a second part 230b (e.g., a bendable part) extending from the first part 230a and at least partially accommodated in the second space 2201 of the base housing 220 so as to be at least partially invisible from the outside in the slide-in state. According to one embodiment, the first part 230a may be disposed to be supported by the movable housing 210, and the second part 230b may be disposed to be supported at least partially by the bendable member (e.g., the bendable member 240 in FIG. 4). According to one embodiment, in the state in which the movable housing 210 is slid out in the first direction (Direction ①), the second part 230b of the flexible display 230 may extend from the first part 230a while being supported by the bendable member (e.g., the bendable member 240 in FIG. 4) and define substantially the same plane as the first part 230a, and the second part 230b of the flexible display 230 may be disposed to be visible from the outside. According to one embodiment, in the state in which the base housing 220 is slid inward in the second direction (Direction ②), the second part 230b of the flexible display 230 may be accommodated in the second space 2201 of the base housing 220 and disposed to be invisible from the outside. Therefore, the electronic device 200 may allow the display area of the flexible display 230 to vary as the movable housing 210 slides in a designated direction (e.g., the ± y-axis direction) from the base housing 220.

According to various embodiments, a length of the flexible display 230 in the first direction (Direction ①) may vary as the movable housing 210 slides relative to the base housing 220. For example, in the slide-in state, the flexible display 230 may have a first display area (e.g., an area corresponding to the first part 230a) corresponding to a first display length H1. According to one embodiment, in the slide-out state, the flexible display 230 may be expanded to have a third display area (e.g., an area including the first part 230a and the second part 230b) larger than the first display area and corresponding to a third display length H3 longer than the first display length H1 as the movable housing 210 slides additionally by a second display length H2 relative to the base housing 220.

According to various embodiments, the electronic device 200 may include at least one of an input device (e.g., microphone 203-1) disposed in the first space 2101 of the movable housing 210, a sound output device (e.g., a telephone receiver 206 or a speaker 207), sensor modules 204 and 217, camera modules (e.g., a first camera module 205 or a second camera module 216), a connector port 208, a key input device 219, or an indicator (not illustrated). According to one embodiment, the electronic device 200 may include another input device (e.g., a microphone 203) disposed on the second housing. As another embodiment, the electronic device 200 may be constituted to exclude at least one of the above-mentioned constituent elements or further include other constituent elements. As another embodiment, at least one of the above-mentioned constituent elements may be disposed in the second space 2201 of the base housing 220.

According to various embodiments, the input device may include the microphone 203-1. In any embodiment, the input device (e.g., the microphone 203-1) may include a plurality of microphones disposed to detect a direction of sound. For example, the sound output device may include the telephone receiver 206 and the speaker 207. According to one embodiment, regardless of the slide-in state/slide-out state, the speaker 207 may correspond to the outside through at least one speaker hole formed in the movable housing 210 at a position (e.g., on the second side surface 2112) always exposed to the outside. According to one embodiment, in the slide-out state, the connector port 208 may correspond to the outside through a connector port hole formed in the movable housing 210. In any embodiment, in the slide-in state, the connector port 208 may correspond to the outside through an opening formed in the second housing and corresponding to the connector port hole. In any embodiment, the telephone receiver 206 may include a speaker (e.g., a piezoelectric speaker) operating without a separate speaker hole.

According to various embodiments, the sensor modules 204 and 217 may generate electrical signals or data values corresponding to an internal operating state of the electronic device 200 or the external environment state. For example, the sensor module 204 and 217 may include a first sensor module 204 (e.g., a proximity sensor or an illuminance sensor) disposed on the front surface of the electronic device 200, and/or a second sensor module 217 (e.g., a heart rate monitoring (HRM) sensor) disposed on the rear surface of the electronic device 200. According to one embodiment, the first sensor module 204 may be disposed on the front surface of the electronic device 200 and provided below the flexible display 230. According to one embodiment, the first sensor module 204 and/or the second sensor module 217 may include at least one of a proximity sensor, an illuminance sensor, a TOF (time of flight) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biosensor, a temperature sensor, and a humidity sensor.

According to various embodiments, the camera modules may include a first camera module 205 disposed on the front surface of the electronic device 200, and a second camera module 216 disposed on the rear surface of the electronic device 200. According to one embodiment, the electronic device 200 may also include a flash (not illustrated) positioned in the vicinity of the second camera module 216. According to one embodiment, the camera modules 205 and 216 may each include one or more lens, an image sensor, and/or an image signal processor. According to one embodiment, the first camera module 205 may be disposed below the flexible display 230 and constituted to capture an image of a subject through a part of an activation area (e.g., the display area) of the flexible display 230.

According to various embodiments, the first camera module 205 among the camera modules and some of the sensor modules 204 among the sensor module 204 and 217 may be disposed to detect the external environment through the flexible display 230. For example, the first camera module 205 or some of the sensor modules 204 may be disposed in the first space 2201 of the movable housing 210 and constituted to adjoin the external environment through a transmissive area formed in the flexible display 230 or an opening formed through the flexible display 230. According to one embodiment, an area of the flexible display 230, which faces the first camera module 205, is a part of the display area for displaying content and may define a transmissive area having a designated transmittance rate. According to one embodiment, the transmissive area may be formed to have a transmittance rate within a range of about 5% to about 20%. The transmissive area may include an area that overlaps an effective area (e.g., a view angle area) of the first camera module 205 through which light, which enters an image sensor to create an image, passes. For example, the transmissive area of the flexible display 230 may include an area having a lower pixel arrangement density and/or wiring density than the periphery thereof. For example, the transmissive area may be substituted with the above-mentioned opening. For example, some of the camera modules 205 may include a under display camera (UDC). In some embodiment, some of the sensor modules 204 may be disposed in the internal space of the electronic device 200 and perform the function thereof without being visually exposed through the flexible display 230.

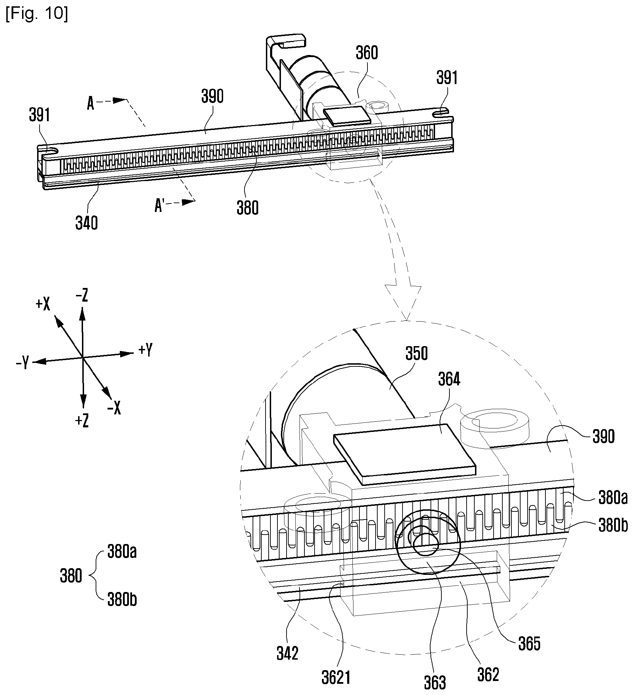

According to various embodiments, the electronic device 200 may include at least one antenna (e.g., the antenna 214b in FIG. 10) electrically connected to a wireless communication circuit (e.g., the wireless communication module 192 in FIG. 1) disposed in the second housing 210. According to one embodiment, the electronic device 200 may also include a bezel antenna A disposed through the second conductive lateral member 221 of the second housing 210. For example, the bezel antenna A may include a conductive portion 227 disposed on at least a part of the fifth side surface 2212 and at least a part of the sixth side surface 2213 of the second lateral member 221 and electrically segmented by one or more segmenting portions 2271 and 2272 made of a non-conductive material (e.g., polymer). According to one embodiment, the wireless communication circuit (e.g., the wireless communication module 192 in FIG. 1) may be configured to transmit or receive a radio signal in at least one designated frequency band (e.g., about 800M Hz to 6000 MHz) (e.g., a legacy band) through the conductive portion 227. According to one embodiment, the electronic device 200 may include a side surface cover 2212a disposed on the fifth side surface 2212 to cover at least a part of the at least one segmenting portion 2271. In any embodiment, the bezel antenna A may also be disposed on at least one of the second side surface 2112, the fourth side surface 2211, the fifth side surface 2212, and the sixth side surface 2213. In any embodiment, the electronic device 200 may further include at least one antenna module (e.g., a 5G antenna module or an antenna structure) disposed in the internal space (e.g., the first space 2101 or the second space 2201) and constituted to transmit or receive a radio signal in a frequency band within a range of about 3G Hz to 100 GHz through another wireless communication circuit (e.g., the wireless communication module 192 in FIG. 1).

According to various embodiments, the sliding-in/sliding-out operation of the electronic device 200 may be performed by a drive motor (e.g., a drive motor 260 in FIG. 4) disposed in the first space 2101 of the movable housing 210 and including a pinion gear and by a gearing operation of a rack gear (e.g., a rack gear 2251 in FIG. 4) disposed in the second space 2201 of the base housing 220 and constituted to engage with the pinion gear 261. For example, in case that a triggering operation for switching the state from the slide-in state to the slide-out state or from the slide-out state to the slide-in state is detected, a processor (e.g., the processor 120 in FIG. 1) of the electronic device 200 may operate the drive motor (e.g., the drive motor 260 in FIG. 4) disposed in the electronic device 200. According to one embodiment, the triggering operation may include an operation of selecting (e.g., touching) an object displayed on the flexible display 230 or an operation of operating a physical button (e.g., a key button) included in the electronic device 200.

The electronic device 200 according to the exemplary embodiments of the present disclosure may provide an extended sliding distance (stroke) by providing a design structure in which the drive motor (e.g., the drive motor 260 in FIG. 4) is provided in the first space 2101 of the movable housing 210 and disposed at the end based on the slide-in direction (Direction ②) (e.g., a lower end of the movable housing 210 in the slide-in state) and the pinion gear of the drive motor 260 moves along the rack gear (e.g., the rack gear 2251 in FIG. 4) disposed to correspond to the second space 2201 of the base housing 220 (e.g., a structure in which the drive motor 260 is disposed at the lower end of the movable housing 210 in the slide-in state). In addition, the electronic device 200 may provide the structure for efficient electrical connection with the drive motor 260 by including electronic components (e.g., a substrate or a battery) disposed in the first space 2101 of the movable housing 210 together with the drive motor 260. In addition, the electronic device 200 includes the support structure disposed in the second space 2201 of the base housing 220 to support at least a part of the flexible display 230 in the slide-out state, which makes it possible to improve operation reliability of the electronic device 200.

Hereinafter, a detailed description will be described.

FIG. 4 is an exploded perspective view of the electronic device according to various embodiments of the present disclosure.

To describe the electronic device 200 in FIG. 4, the constituent elements, which are substantially the same as the constituent elements of the electronic device 200 in FIGS. 2A to 3B, will be designated by the same reference numerals, and a detailed description thereof will be omitted.

With reference to FIG. 4, the electronic device 200 may include: the movable housing 210 including the first space 2101; the base housing 220 slidably coupled to the movable housing 210 and including the second space (e.g., the second space 2201 in FIG. 3A); the bendable member 240 disposed in the second space 2201 and constituted to be at least partially rotatable; the flexible display 230 disposed to be supported by at least a part of the bendable member 240 and the movable housing 210; and a drive module constituted to operate the movable housing 210 in a direction (e.g., the -y-axis direction) in which the movable housing 210 slides in from the base housing 220 and/or a direction (e.g., the y-axis direction) in which the movable housing 210 slides out. According to one embodiment, the drive module may include the drive motor 260 disposed in the first space 2101 and including the pinion gear, and a rack gear 2251 disposed in the second space 2201 and constituted to engage with the pinion gear 261. According to one embodiment, the drive module may further include a speed reduction module coupled to the drive motor 260 and disposed to reduce a rotational speed and increase driving power. According to one embodiment, the drive motor 260 may be disposed in the first space 2101 of the movable housing 210 and supported by at least a part of the first support member 212. According to one embodiment, the drive motor 260 may be disposed in the first space 2101 and fixed to an end (e.g., an edge) of the first support member 212 in the slide-in direction (e.g., the -y-axis direction).

According to various embodiments, the electronic device 200 may include a plurality of electronic components disposed in the first space 2101. According to one embodiment, the plurality of electronic components may include a first substrate 251 (e.g., a main substrate), a camera module 216 disposed at the periphery of the first substrate 251, a socket module 218 (e.g., a SIM tray), the speaker 207, the connector port 208, and a battery B. According to one embodiment, the plurality of electronic components, together with the drive motor 260, is provided in the first space 2101 of the movable housing 210 and disposed at the periphery of the first substrate 251, thereby enabling efficient electrical connection.

According to various embodiments, the electronic device 200 may include a rear bracket 214 disposed between the first rear surface cover 213 and the first support member 212 of the movable housing 210 and constituted to cover at least some of the plurality of electronic components. According to one embodiment, the bracket 214 may be structurally coupled to at least a part of the first support member 212. In any embodiment, the rear bracket 214 may be excluded. According to one embodiment, the rear bracket 214 may be disposed to cover the plurality of electronic components and support the first rear surface cover 213. According to one embodiment, the rear bracket 214 may include a notch area 214a or an opening 214a (e.g., a through-hole) formed in an area corresponding to the camera module 216 and/or the sensor module (e.g., the sensor module 217 in FIG. 3B). According to one embodiment, the camera module 216 and/or the sensor module 217 may be disposed to detect the external environment through the notch area 214a or the opening 214a. According to one embodiment, an area of the first rear surface cover 213, which at least corresponds to the camera module 216 and/or the sensor module 217, may be transparent. In any embodiment, the camera module 216 and/or the sensor module 217 may be constituted to operate only in case that the electronic device 200 is in the slide-out state.

According to various embodiments, the electronic device 200 may include a plate type support bracket 225 (e.g., a DSB or a display support bar) disposed in the second space 2201 of the base housing 220 and slidably coupled to at least a part of the first support member 212. According to one embodiment, the support bracket 225 may include an opening 225a having a designated size. According to one embodiment, the support bracket 225 may include a support part 2252 disposed at one end and having an outer surface formed in a curved shape to support a rear surface of the bendable member 240 that is bent while sliding. According to one embodiment, the support bracket 225 may include a support plate 2253 extending from at least a part of the support part 2252 to at least a part of the opening 225a to support the rear surface of the bendable member 240 in the slide-out state. According to one embodiment, the support bracket 225 may include the rack gear 2251 constituted to traverse the opening 225a and fixed to have a length in a direction parallel to the sliding direction. In any embodiment, the rack gear 2251 may be integrated with the support bracket 225. According to one embodiment, the electronic device 200 may include a pair of guide rails 226 disposed on two opposite surfaces of the support bracket 225 and constituted to guide two opposite ends of the bendable member 240 in the sliding direction.

According to various embodiments, the base housing 220 may include an opening 222a (e.g., a through-hole) formed in the second support member 222 and disposed in an area corresponding to the camera module 216 and/or the sensor module 217 disposed on the movable housing 210 when the electronic device 200 is in the slide-in state. According to one embodiment, the camera module 216 and/or the sensor module 217 may detect the external environment through the opening 222a formed in the base housing 220 when the electronic device 200 is in the slide-in state. In this case, an area of the second rear surface cover 223, which at least corresponds to the camera module 216 and/or the sensor module 217, may be transparent.

According to various embodiments, the electronic device 200 may include a second substrate 252 and an antenna member 253 disposed in a space between the second rear surface cover 223 and the second support member 222 of the base housing 220. According to one embodiment, the second substrate 252 and the antenna member 253 may be electrically connected to the first substrate 251 through at least one electrical connection member (e.g., a flexible printed circuit board (FPCB) or a flexible RF cable (FRC)). In any embodiment, because the antenna member 253 is electrically connected to the second substrate 252, the antenna member 253 may be electrically connected to the first substrate 251 through the second substrate 252.

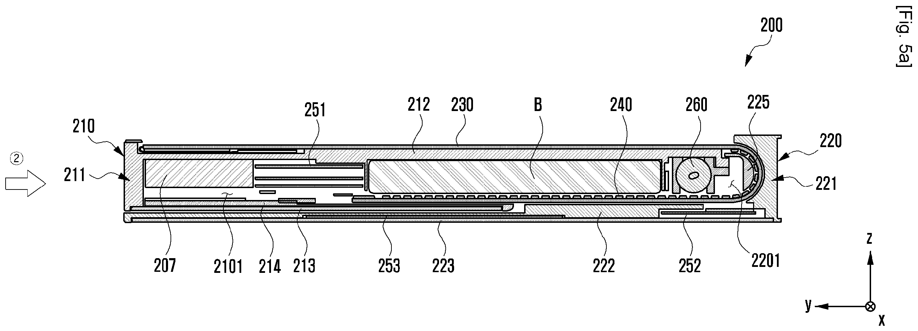

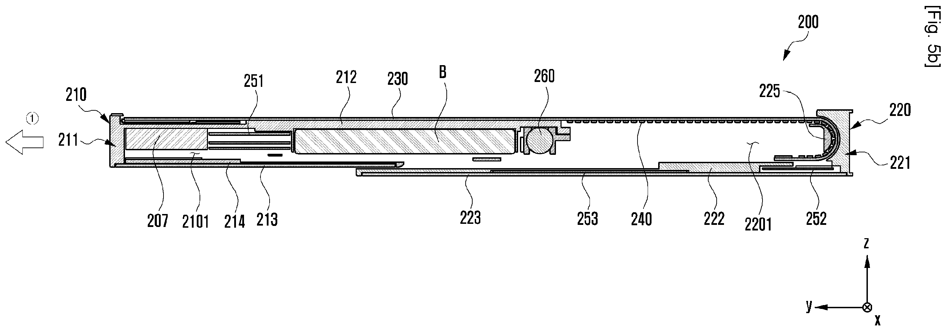

FIG. 5A is a cross-sectional view of the electronic device according to various embodiments of the present disclosure when viewed along line 5a-5a in FIG. 2A. FIG. 5B is a cross-sectional view of the electronic device according to various embodiments of the present disclosure when viewed along line 5b-5b in FIG. 3A.

To describe the electronic device in FIGS. 5A and 5B, the constituent elements, which are substantially the same as the constituent elements of the electronic device in FIG. 4, will be designated by the same reference numerals, and a detailed description thereof will be omitted.

With reference to FIGS. 5A and 5B, the electronic device 200 may include: the movable housing 210 having the first space 2101; the base housing 220 having the second space 2201; the bendable member 240 connected to the movable housing 210 and at least partially accommodated in the second space 2201 in the slide-in state; the flexible display 230 disposed to be supported by at least a part of the bendable member 240 and at least a part of the movable housing 210; and the drive motor 260 disposed in the first space 2101 and include the pinion gear constituted to engage with the rack gear of the second space 2201. According to one embodiment, the drive motor 260 may move the movable housing 210 in the slide-in direction (Direction ②) or the slide-out direction (Direction ①) relative to the base housing 220.

According to various embodiments, at least a part of the movable housing 210 may be accommodated in the second space 2201 of the base housing 220 when the electronic device 200 is in the slide-in state. According to one embodiment, the first support member 212 may be slidably coupled and guided by the support bracket 225 disposed in the second space 2201. In this case, at least a part of the flexible display 230, together with the bendable member 240, is accommodated in the second space 2201, such that at least a part of the flexible display 230 may be disposed to be invisible from the outside. Therefore, the first display area of the flexible display 230 may be exposed to the outside.

According to various embodiments, at least a part of the movable housing 210 may be switched, by the operation of the drive motor 260, to the slide-out state in which at least a part of the movable housing 210 is at least partially exposed to the outside of the base housing 220 in the first direction (Direction ①). According to one embodiment, the flexible display 230 moves together with the bendable member 240 while being supported by the support bracket 225 when the electronic device 200 is in the slide-out state, such that a portion of the flexible display 230, which has slid in the second space 2201, may be at least partially exposed to the outside. Therefore, an expanded second display area of the flexible display 230, which is larger than the first display area, may be exposed to the outside.

In case that the drive motor 260 and the electronic components (e.g., the first substrate 251 and the battery B) are disposed in the movable housing 210, the drive motor 260 and the electronic components move together in accordance with the sliding-in/sliding-out operation of the movable housing 210, such that the number of electrical connection members is minimized in comparison with the arrangement structure in which the corresponding constituent elements are disposed in the base housing 220 and connected to the first substrate 251 through the electrical connection members. Therefore, it is possible to improve the operation reliability of the electronic device 200 and assist in efficiently disposing and designing the electronic component. However, the embodiment of the present disclosure is not limited to the constitution in which the drive motor 260 and the electronic components (e.g., the first substrate 251 and the battery B) are disposed in the movable housing 210. In another embodiment, the opposite case is possible.

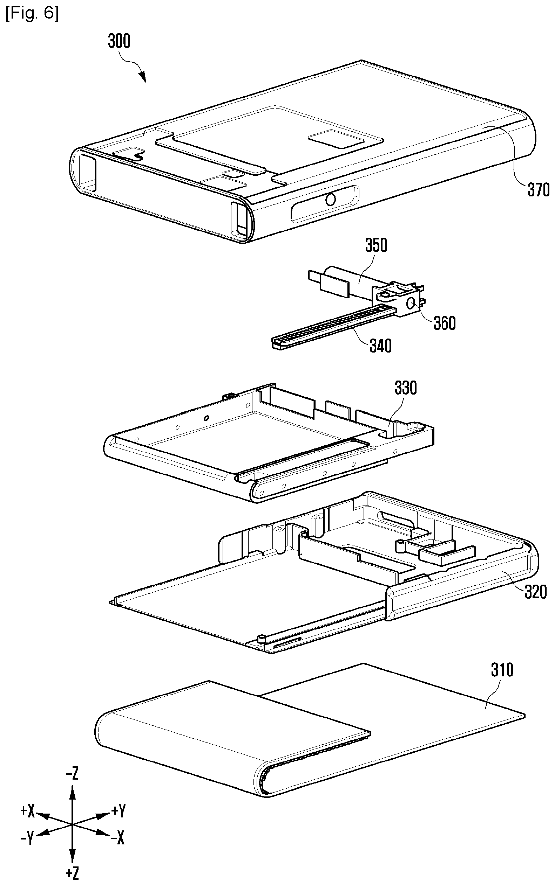

FIGS. 4 to 5B illustrate that the electronic components (e.g., the first substrate 251) and the drive motor 260 including the pinion gear 261 are disposed in the movable housing 210, and the rack gear 2251 is disposed in the base housing 220. However, the arrangement of the drive motor 260, the electronic components (e.g., the first substrate 251), and the rack gear 2251 may not be limited thereto. For example, in another embodiment, all the drive motor 260, the electronic components (e.g., the first substrate 251), and the rack gear 2251 may be disposed in the movable housing 210 or disposed in the base housing 220. In still another embodiment, the drive motor 260 and the electronic components (e.g., the first substrate 251) may be disposed in the base housing 220, and the rack gear 2251 may be disposed in the movable housing 210. In yet another embodiment, the drive motor 260, the electronic components (e.g., the first substrate 251), and/or the rack gear 2251 may be disposed in another structure (e.g., a frame cover 330 (see FIG. 6)) other than the movable housing 210 or the base housing 220.

FIG. 6 is an exploded perspective view of an electronic device 300 according to various embodiments of the present disclosure.

The electronic device 300 in FIG. 6 may further include another embodiment of the electronic device at least partially similar to the electronic device 200 in FIGS. 2A to 5B.

In the description of the electronic device 300 according to various embodiments of the present disclosure, a width direction of the electronic device 300 may mean an x-axis direction, and a longitudinal direction of the electronic device 300 may mean a y-axis direction. A height direction of the electronic device 300 may mean a z-axis direction.

The electronic device 300 according to various embodiments of the present disclosure includes a flexible display 310, a first housing 370, a second housing 320, a frame cover 330, a rack gear 340, a drive motor 350, and/or a pinion gear part 360.

The flexible display 310 illustrated in FIG. 6 may mean the flexible display 230 illustrated in FIGS. 5A and 5B or be at least partially similar to the flexible display 230.

In various embodiments, the flexible display 310 may be an area that performs input and output operations of the electronic device 300. At least a part of the flexible display 310 may be curved, and a size of a display area, which is a portion visible to the outside, may increase or decrease in accordance with a sliding motion of the second housing 320 relative to the first housing 370.

The first housing 370 illustrated in FIG. 6 may mean the base housing 220 illustrated in FIG. 4 or be at least partially similar to the base housing 220.

In various embodiments, at least a part of the flexible display 310 may be disposed in a space formed in the first housing 370. The frame cover 330 may be disposed in the first housing 370. The drive motor 350 disposed on the frame cover 330, together with the frame cover 330, may also be disposed in the first housing 370. The first housing 370 may be an area to be gripped by a user of the electronic device 300.

The second housing 320 illustrated in FIG. 6 may mean the movable housing 210 illustrated in FIG. 4 or be at least partially similar to the movable housing 210.

In various embodiments, the flexible display 310 may be disposed on at least a part of the second housing 320. The second housing 320 may support the flexible display 310. A battery B (see FIG. 5A) and a printed circuit board (not illustrated) may be disposed on at least a part of the second housing 320.

In various embodiments, the drive motor 350 may be disposed on at least a part of the frame cover 330. A relative position between the frame cover 330 and the second housing 320 may be changed as the second housing 320 slides.

The rack gear 340 illustrated in FIG. 6 may mean the rack gear 2251 illustrated in FIG. 4 or be at least partially similar to the rack gear 2251.

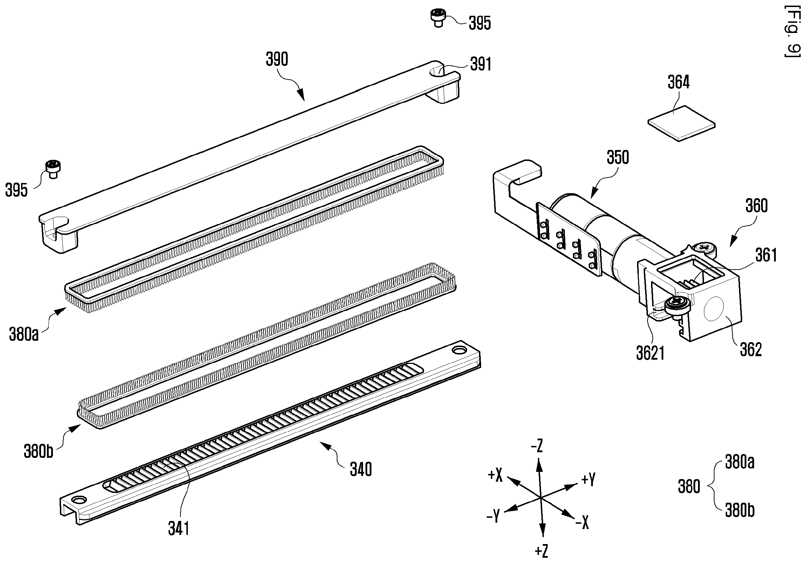

In various embodiments, the rack gear 340 may be disposed in the second housing 320. The rack gear 340 may be connected to the pinion gear part 360 and slide in a longitudinal direction (e.g., the y-axis direction) of the electronic device. A foreign substance blocking mechanism 380 (see FIG. 9) may be disposed on at least a part of the rack gear 340.

The drive motor 350 illustrated in FIG. 6 may mean the drive motor 260 illustrated in FIG. 4 or be at least partially similar to the drive motor 260.

In various embodiments, the drive motor 350 may be disposed on the frame cover 330. The drive motor part 350 may generate a rotational force and transmit the rotational force to the pinion gear part 360.

In various embodiments, the pinion gear part 360 may be connected to the drive motor part 350. The pinion gear part 360 may include a pinion gear 361 (see FIG. 9). The pinion gear 361 (see FIG. 9) may rotate by receiving the rotational force generated by the drive motor 350. At least a part of the pinion gear part 360 may be disposed on the rack gear 340.

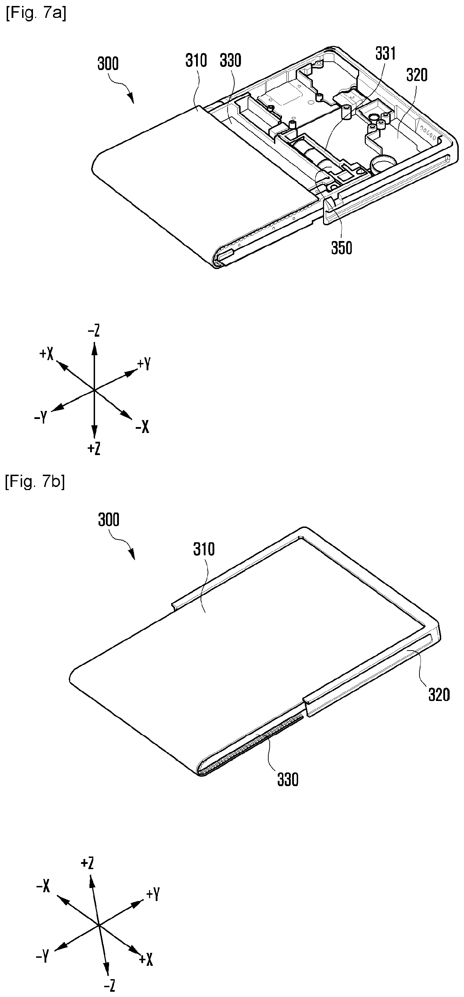

FIG. 7A is a view illustrating a rear surface (e.g., a surface directed in a negative z-axis direction) of a part of the electronic device 300 in the slide-in state according to various embodiments of the present disclosure.

FIG. 7B is a view illustrating a front surface (e.g., a surface directed in a positive z-axis direction) of a part of the electronic device 300 in the slide-in state according to various embodiments of the present disclosure.

With reference to FIG. 7A, the drive motor 350 may be disposed on at least a part of the frame cover 330. For example, the frame cover 330 may include therein a space in which electrical components (e.g., the drive motor 350 and the like) may be disposed, and the drive motor 350 may be disposed in the space formed in the frame cover 330.

With reference to FIGS. 7A and 7B, the flexible display 310 may be disposed on at least a part of the frame cover 330. For example, the flexible display 310 may be disposed to surround one surface (e.g., a surface directed in the negative z-axis direction) of the frame cover 330, the other surface (e.g., a surface directed in the positive z-axis direction) of the frame cover 330, and one side (e.g., a side surface directed in the negative y-axis direction) of the frame cover 330.

With reference to FIGS. 7A and 7B, at least a part of the frame cover 330 may include a seating space 331. The drive motor 350 may be disposed in the seating space 331 of the frame cover 330.

With reference to FIGS. 7A and 7B, at least a part of the frame cover 330 may be disposed on the second housing 320 in the slide-in state. For example, the frame cover 330 may be disposed on one surface (e.g., a surface directed in the negative z-axis direction) of the second housing 320.

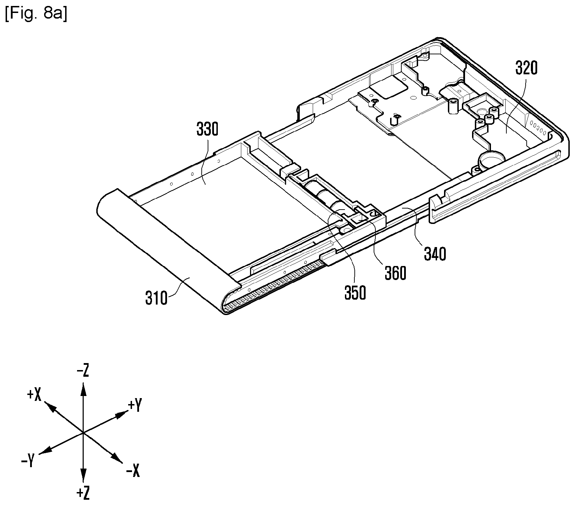

FIG. 8A is a view illustrating a rear surface (e.g., a surface directed in the negative z-axis direction) of a part of the electronic device 300 in the slide-out state according to various embodiments of the present disclosure.

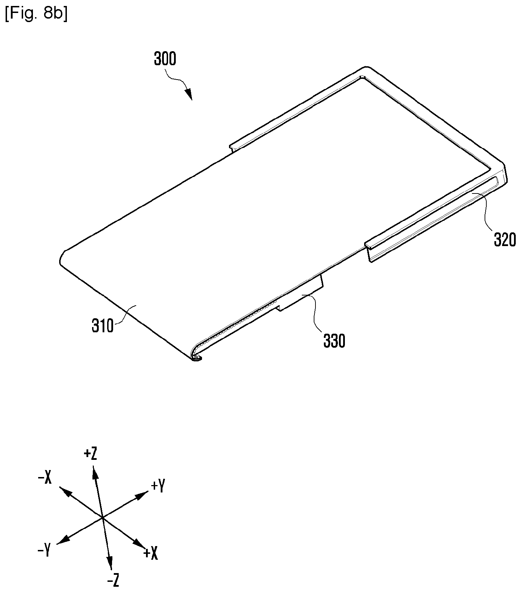

FIG. 8B is a view illustrating a front surface (e.g., a surface directed in the positive z-axis direction) of a part of the electronic device 300 in the slide-out state according to various embodiments of the present disclosure.

With reference to FIGS. 8A and 8A, the second housing 320 may slide in the longitudinal direction (e.g., the positive y-axis direction) of the electronic device 300.

With reference to FIG. 8A, at least a part of the rack gear 340 may be disposed on at least a part of the second housing 320. For example, the rack gear 340 may be disposed at one side of one surface (e.g., a surface directed in the negative z-axis direction) of the second housing 320.

With reference to FIG. 8A, the pinion gear part 360 may be positioned on one surface (e.g., a surface directed in the negative z-axis direction) of the rack gear 340.

In various embodiments, in case that the second housing 320 slides, the rack gear 340 may move together with the second housing 320. A relative position between the rack gear 340 and the pinion gear part 360 may be changed as the rack gear 340 moves.

With reference to FIG. 8B, the display area of the flexible display 310 may increase as the second housing 320 slides.

FIG. 9 is an exploded perspective view illustrating the foreign substance blocking mechanism 380, the rack gear 340, and a rack cover 390 according to various embodiments of the present disclosure.

In various embodiments, the rack gear 340 may extend in the longitudinal direction (e.g., the y-axis direction) of the electronic device 300. The rack gear 340 may include an interlocking area 341. The engagement area 341 may be an area in which portions protruding from one surface of the rack gear 340 are disposed at intervals in the longitudinal direction (e.g., the y-axis direction) of the rack gear 340. The pinion gear 361 may be disposed to engage with at least a part of the interlocking area 341.

In various embodiments, the foreign substance blocking mechanism 380 is disposed on one surface of the rack gear 340. For example, the foreign substance blocking mechanism 380 may be disposed on one surface (e.g., a surface directed in the negative z-axis direction) of the rack gear 340 while surrounding an outer periphery of the engagement area 341.

In various embodiments, the foreign substance blocking mechanism 380 includes a first blocking mechanism 380a and/or a second blocking mechanism 380b. The first blocking mechanism 380a and the second blocking mechanism 380b may extend in the longitudinal direction (e.g., the y-axis direction) of the electronic device 300. The first blocking mechanism 380a is disposed on the rack cover 390, and the second blocking mechanism 380b is disposed on the rack gear 340.

In various embodiments, the rack cover 390 may extend in the longitudinal direction (e.g., the y-axis direction) of the electronic device 300. The rack cover 390 may include coupling areas 391 at one end and the other end of the rack cover 390.

In various embodiments, the coupling area 391 of the rack cover 390 may be coupled to the rack gear 340 by using a separate fastening member 395. The separate fastening member 395 may include a bolt and/or a rivet. In case that the fastening member 395 is a bolt, a bolt having a screw thread formed on a surface thereof may be fixed to the coupling area 391 by screw fastening. In case that the fastening member 395 is a rivet, the rivet made of a metallic material and having a pin shape may be fixed to the coupling area 391.

A method of coupling the rack cover 390 and the rack gear 340 is not limited to a method using a separate fastening member 395 and may be implemented as various methods such as bonding, welding, or the like. For example, in the embodiment, at least a part of the rack gear 340 or the coupling area 391 of the rack cover 390 may be coupled by a bonding method using a bonding agent. In another embodiment, the rack cover 390 and the rack gear 340 may be coupled as at least a part of the rack gear 340 or at least a part of the coupling area 391 of the rack cover 390 is partially melted by welding.

In the embodiment, a snap-fit fastening method may be used to couple the rack cover 390 and the rack gear 340. In case that the snap-fit fastening method is used, at least a part of the rack cover 390 and at least a part of the rack gear 340 may have shapes corresponding to each other. For example, in case that the snap-fit fastening method is used, at least a part of the rack cover 390 may include a latch shape, and at least a part of the rack gear 340 may include a groove shape with which the latch shape of the rack cover 390 may be fitted.

In various embodiments, the rack cover 390 and the rack gear 340 may be coupled while being in close contact with each other in the coupling area 391. Foreign substances may be introduced into the rack gear 340 in case that the coupling area 391 of the rack cover 390 is spaced apart from the rack gear 340. Therefore, the rack cover 390 and the rack gear 340 are in close contact with each other in the coupling area 391 without being spaced apart from each other, which makes it possible to prevent foreign substances from being introduced into the engagement area 341 of the rack gear 340 through the coupling area 391 of the rack cover 390.

In various embodiments, and according to the present invention, the foreign substance blocking mechanism 380 is disposed between the rack gear 340 and the rack cover 390. The rack cover 390, the foreign substance blocking mechanism 380, and the rack gear 340 may be sequentially disposed in the height direction (e.g., the z-axis direction) of the electronic device 300. For example, the second blocking mechanism 380b may be disposed in the negative z-axis direction based on the rack gear 340. The first blocking mechanism 380a may be disposed in the negative z-axis direction based on the second blocking mechanism 380b. The rack cover 390 may be disposed in the negative z-axis direction based on the first blocking mechanism 380a.

With reference to FIG. 9, the drive motor 350 is connected to the pinion gear part 360. For example, the drive motor 350 may be connected to the pinion gear part 360 at one end (e.g., a distal end of the drive motor 350 directed in the negative x-axis direction) of the drive motor 350. The drive motor 350 may generate a rotational force, and the rotational force generated by the drive motor 350 may be transmitted to the pinion gear part 360.

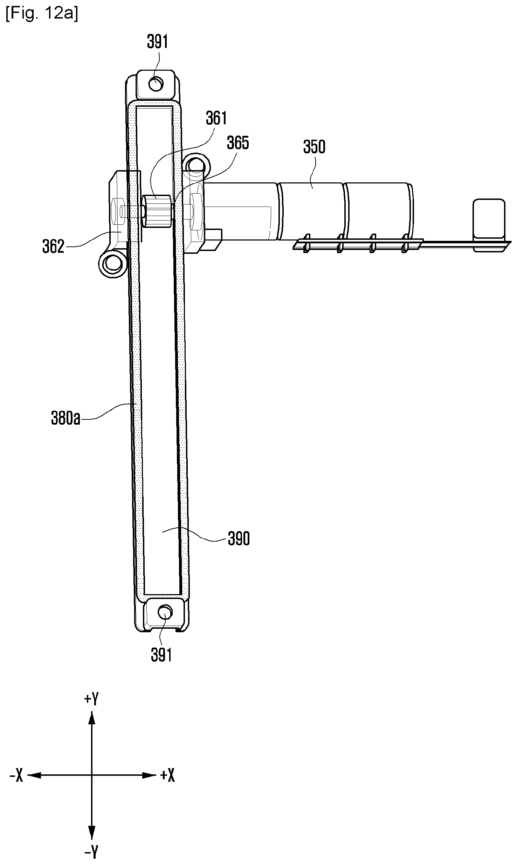

In various embodiments, the pinion gear part 360 may include the pinion gear 361, a frame 362, a bearing 363 (see FIG. 10), a frame cover 364, and/or a gear shaft 365 (see FIG. 12A). The pinion gear 361 may be a gear including a serrated shape at a periphery thereof. The pinion gear 361 may rotate about the gear shaft 365 (see FIG. 12A) by receiving the rotational force generated by the drive motor 350.

In various embodiments, the rack gear 340 may perform a rectilinear motion, and the pinion gear 361 may perform a rotational motion.

In various embodiments, the pinion gear 361 may be disposed on at least a part of the frame 362. The frame 362 may include a space in which the pinion gear 361 is disposed.

In various embodiments, at least a part of the frame 362 may include a plate shape extending in the height direction (e.g., the z-axis direction) and the longitudinal direction (e.g., the y-axis direction) of the electronic device 300. At least a part of the frame 362 may support the gear shaft 365 (see FIG. 12A).

In various embodiments, the frame 362 may include a connection area 3621. The frame 362 may be connected to the rack gear 340 in the connection area 3621.

In various embodiments, the frame cover 364 may be disposed on at least a part of the frame 362. The frame cover 364 may be positioned to be spaced apart from the pinion gear 361 in the negative z-axis direction. The frame cover 364 may serve to prevent foreign substances from being introduced into the pinion gear 361.

In various embodiments, and according to the present invention, the foreign substance blocking mechanism 380 serves to prevent foreign substances from being introduced into the engagement area 341 of the rack gear 340 and the pinion gear 361.

FIG. 10 is a perspective view illustrating the foreign substance blocking mechanism 380 and the pinion gear 361 according to various embodiments of the present disclosure.

In various embodiments, a longitudinal direction of the rack gear 340 may be a direction parallel to the longitudinal direction of the electronic device 300, and a width direction of the rack gear 340 may be a direction parallel to the width direction of the electronic device 300. For example, the longitudinal direction of the rack gear 340 may mean the y-axis direction, and the width direction of the rack gear 340 may mean the x-axis direction.

In various embodiments, the rack gear 340 may include slide areas 342 at one side and the other side thereof. The slide areas 342 may be formed at one side and the other side of the rack gear 340 and extend in the longitudinal direction of the rack gear 340. The slide area 342 may have a shape in which at least a part of the rack gear 340 protrudes one direction and the other direction of the rack gear 340.

In various embodiments, at least a part of the rack gear 340 may be connected to the pinion gear part 360. With reference to FIG. 10, at least a part of the rack gear 340 may be disposed in the connection area 3621 of the frame 362. For example, the slide area 342 of the rack gear 340 may be disposed in the connection area 3621 of the frame 362.

In various embodiments, the rack gear 340 may slide in the longitudinal direction (e.g., the y-axis direction) of the rack gear 340. For example, in the rack gear 340, the slide area 342 of the rack gear 340 may be disposed in the connection area 3621 of the frame 362 and slide in the longitudinal direction of the rack gear 340.

In various embodiments, and according to the present invention, the rack cover 390 is fixedly connected to the rack gear 340, and the foreign substance blocking mechanism 380 may be fixed to the rack cover 390 and the rack gear 340. The rack gear 340, the foreign substance blocking mechanism 380, and the rack cover 390 are disposed to be fixed to one another. Therefore, when the rack gear 340 slides in the longitudinal direction of the rack gear 340, the rack cover 390 and the foreign substance blocking mechanism 380 may also slide in the longitudinal direction of the rack gear 340.

In various embodiments, the drive motor 350 may extend in a direction perpendicular to the direction in which the rack gear 340, the foreign substance blocking mechanism 380, and the rack cover 390 extend. For example, the rack gear 340, the foreign substance blocking mechanism 380, and the rack cover 390 may extend in the longitudinal direction (e.g., the y-axis direction) of the rack gear 340, and the drive motor 350 may extend in the width direction (e.g., the x-axis direction) of the rack gear 340. The drive motor 350 may be connected to the pinion gear part 360 at one end (e.g., a distal end of the drive motor 350 directed in the negative x-axis direction).

In various embodiments, at least a part of the pinion gear part 360 may include the bearing 363. The bearing 363 may be connected to the gear shaft 365. The bearing 363 may serve to allow the pinion gear 361 to smoothly rotate.

In various embodiments, and according to the present invention, the foreign substance inflow prevention structure is a structure including the rack gear 340, the rack cover 390, and the foreign substance blocking mechanism 380. For example, the foreign substance inflow prevention structure may be a structure that includes the foreign substance blocking mechanism 380 disposed on at least a part of the rack cover 390 and the rack gear 340 and prevents an inflow of foreign substances.

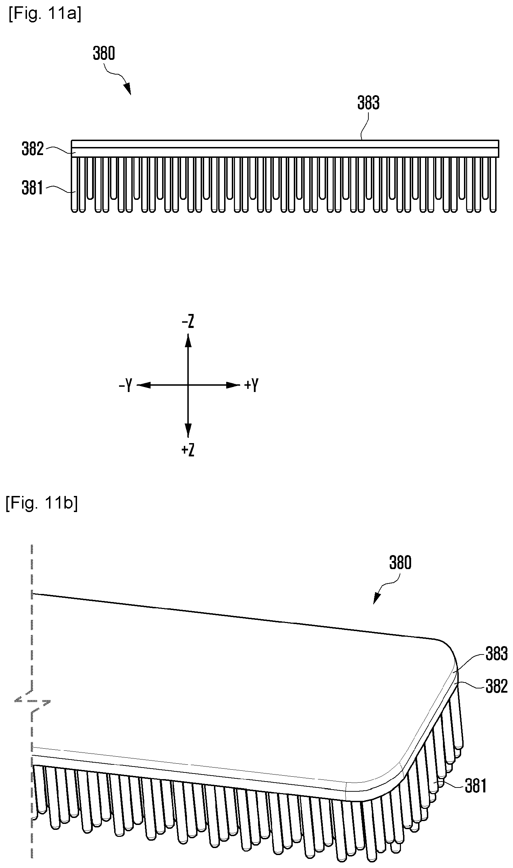

FIG. 11A is a front view illustrating the foreign substance blocking mechanism 380 according to various embodiments of the present disclosure.

FIG. 11B is a perspective view illustrating the foreign substance blocking mechanism 380 according to various embodiments of the present disclosure.

With reference to FIGS. 11A and 11B, the foreign substance blocking mechanism 380 according to various embodiments of the present disclosure may include blocking members 381, a fixing plate 382, and/or a bonding member 383.

In various embodiments, the plurality of blocking members 381 may be disposed on one surface of the fixing plate 382. The plurality of blocking members 381 may extend in the direction away from one surface of the fixing plate 382.

In various embodiments, the blocking member 381 may include a fiber material. The blocking member 381 may have a thickness of about 0.03 mm to 0.05 mm and extend in the direction away from one surface of the fixing plate 382.

In various embodiments, the thickness of the blocking member 381 may mean a length of a cross-section (e.g., a cross-section perpendicular to the z-axis direction) defined by the single blocking member 381. For example, in case that the blocking member 381 has a circular cross-section, the thickness of the blocking member 381 may mean a diameter (e.g., a length in the x-axis direction) of the circular cross-section.

In various embodiments, in case that the blocking member 381 includes a fiber material, frictional resistance of the blocking member 381 and the gear shaft 365 (see FIG. 10) decreases, which makes it easy for the rack gear 340 (see FIG. 10) to slide.

In various embodiments, the plurality of blocking members 381 each includes a fiber material, such that the plurality of blocking members 381 may be interlaced with one another. In case that the plurality of blocking members 381 is interlaced with one another, it is possible to improve an effect of preventing the inflow of foreign substances.

In various embodiments, the plurality of blocking members 381 may independently change in shape. Even though some of the plurality of blocking members 381 are deformed in shape by an external force applied from the outside, the remaining blocking members 381 may be maintained in shape without being affected by the external force. For example, even though some of the blocking members 381 are deformed in shape by coming into contact with the gear shaft 365 (see FIG. 10), the original shapes of the remaining blocking members 381 may be maintained.

In various embodiments, the fixing plate 382 may have a plate shape having a predetermined thickness. For example, the fixing plate 382 may have a thickness of about 0.3 mm to 0.4 mm.

In various embodiments, the bonding member 383 may be disposed on the other surface of the fixing plate 382. The other surface of the fixing plate 382 may mean a surface opposite to a surface on which the blocking member 381 is disposed. The bonding member 383 may serve to connect the fixing plate 382 and the plurality of blocking members 381, which is connected to the fixing plate 382, to the rack gear 340 (see FIG. 10) or the rack cover 390 (see FIG. 10).

In various embodiments, the bonding member 383 may include a double-sided tape. In the bonding member 383 including the double-sided tape, one surface of the bonding member 383 may be bonded to the fixing plate 382, and the other surface of the bonding member 383 may be bonded to the rack gear 340 or the rack cover 390.

FIG. 12A is a view illustrating the first blocking mechanism 380a disposed on the rack cover 390 according to various embodiments of the present disclosure.

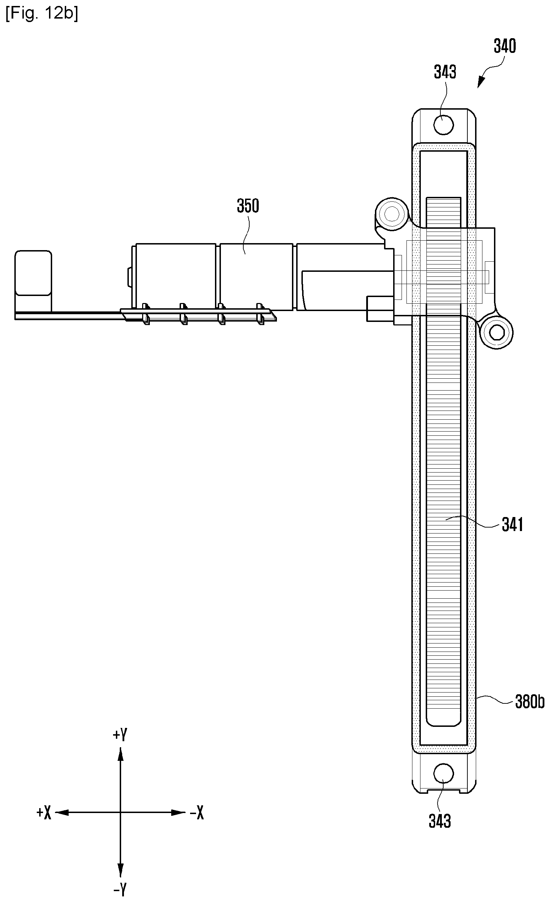

FIG. 12B is a view illustrating the second blocking mechanism 380b disposed on the rack gear 340 according to various embodiments of the present disclosure.

The foreign substance blocking mechanism 380 according to the present invention includes the first blocking mechanism 380a and the second blocking mechanism 380b. The first blocking mechanism 380a may mean the foreign substance blocking mechanism 380 disposed on the rack cover 390. The second blocking mechanism 380b may mean the foreign substance blocking mechanism 380 disposed on the rack gear 340.

In various embodiments, the first blocking mechanism 380a and the second blocking mechanism 380b may each include the blocking members 381 (see FIG. 11A), the fixing plate 382 (see FIG. 11A), and the bonding member 383 (see FIG. 11A).

With reference to FIG. 12A, the first blocking mechanism 380a may be disposed on one surface of the rack cover 390. For example, the first blocking mechanism 380a may be disposed along at least a part of the periphery of the rack cover 390. On the X-Y plane, the first blocking mechanism 380a may have a rectangular shape extending in the longitudinal direction (e.g., the y-axis direction) and the width direction (e.g., the x-axis direction) of the rack cover 390.

In various embodiments, the first blocking mechanism 380a may be bonded to one surface of the rack cover 390 by using the bonding member 383 (see FIG. 11A).

In various embodiments, the pinion gear 361 may be disposed in a space formed inside the periphery of the first blocking mechanism 380a. The rack gear 340 may be moved by the rotation of the pinion gear 361, and the rack cover 390 connected to the rack gear 340 in the coupling area 391 may also slide in the longitudinal direction (e.g., the y-axis direction) of the rack cover 390. The first blocking mechanism 380a may slide together with the rack cover 390. A position of the pinion gear 361 relative to the first blocking mechanism 380a may be changed as the first blocking mechanism 380a moves.

With reference to FIG. 12B, the rack gear 340 may include coupling openings 343. The coupling openings 343 may be formed at one end and the other end of the rack gear 340. The rack gear 340 may be coupled to the rack cover 390 by means of the coupling openings 343 by using separate fastening members (not illustrated).

In various embodiments, the gear shaft 365 may be disposed while penetrating the pinion gear 361. The gear shaft 365 may be disposed such that one end of the gear shaft 365 is positioned on the frame 362. The frame 362 may serve to support the gear shaft 365. The gear shaft 365 may be connected to the drive motor 350 at the other end of the gear shaft 365. The gear shaft 365 may transmit the rotational force, which is generated by the drive motor 350, to the pinion gear 361.

With reference to FIG. 12B, the second blocking mechanism 380b may be disposed on one surface of the rack gear 340. For example, the second blocking mechanism 380b may be disposed along at least a part of the periphery of the rack gear 340. On the X-Y plane, the second blocking mechanism 380b may have a rectangular shape extending in the longitudinal direction (e.g., the y-axis direction) and the width direction (e.g., the x-axis direction) of the rack gear 340. The second blocking mechanism 380b is disposed at a position corresponding to the first blocking mechanism 380a.

With reference to FIG. 12B, the second blocking mechanism 380b may be disposed at the outer periphery of the engagement area 341. For example, the second blocking mechanism 380b may be positioned to be spaced apart from one side and the other side of the engagement area 341. The second blocking mechanism 380b may serve to prevent outside foreign substances from being introduced into the engagement area 341.

In various embodiments, the second blocking mechanism 380b may be bonded to one surface of the rack gear 340 by using the bonding member 383 (see FIG. 11A).

In various embodiments, the pinion gear 361 may be disposed in a space formed inside the second blocking mechanism 380b. The rack gear 340 may be slid in the longitudinal direction (e.g., the y-axis direction) of the rack gear 340 by the rotation of the pinion gear 361. Because the second blocking mechanism 380b is bonded to the rack gear 340, the second blocking mechanism 380b may slide together with the rack gear 340. A position of the pinion gear 361 relative to the second blocking mechanism 380b may be changed as the second blocking mechanism 380b moves.

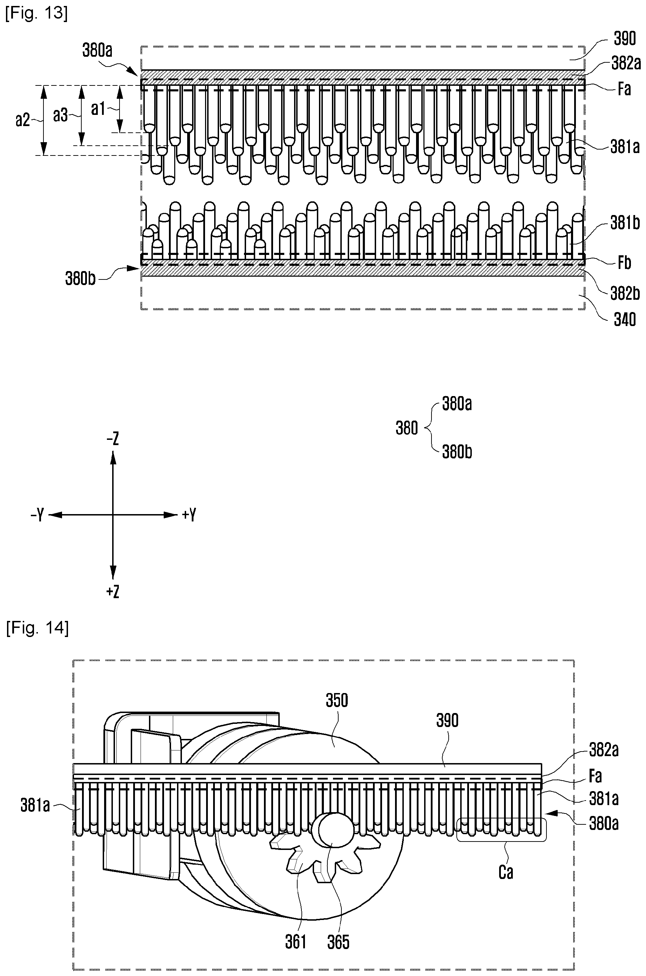

FIG. 13 is a view illustrating the first blocking mechanism 380a and the second blocking mechanism 380b according to various embodiments of the present disclosure.

In various embodiments, a height direction of the foreign substance blocking mechanism 380 may be a direction parallel to the height direction of the electronic device 300. For example, the height direction of the foreign substance blocking mechanism 380 may mean the z-axis direction.

FIG. 13 is a view illustrating a state made before the first blocking mechanism 380a and the second blocking mechanism 380b according to various embodiments of the present disclosure are assembled. For example, FIG. 13 illustrates that the first blocking mechanism 380a is spaced apart from the second blocking mechanism 380b in the height direction (e.g., the z-axis direction) of the foreign substance blocking mechanism 380. However, in the state in which the electronic device 300 (see FIG. 7A) is completely assembled, the first blocking mechanism 380a and the second blocking mechanism 380b may be in contact with each other without being spaced apart from each other in the height direction of the foreign substance blocking mechanism 380.

With reference to FIG. 13, the blocking member 381a of the first blocking mechanism 380a may be disposed on one surface of the first fixing plate 382a, and the blocking member 381b of the second blocking mechanism 380b may be disposed on one surface of the second fixing plate 382b. The rack cover 390 may be disposed on the other surface of the first fixing plate 382a, and the rack gear 340 may be disposed on the other surface of the second fixing plate 382b. The first fixing plate 382a and the rack cover 390 may be bonded by using the bonding member 383 (see FIG. 11A). The second fixing plate 382b and the rack gear 340 may be bonded by using the bonding member 383 (see FIG. 11A).

In various embodiments, the plurality of blocking members 381a and 381b may respectively and at least partially include fixing areas Fa and Fb. The plurality of blocking members 381a and 381b may be respectively fixed to the fixing plates 382a and 382b in the fixing areas Fa and Fb. For example, the blocking member 381a of the first blocking mechanism 380a may be fixed to the first plate 382a in the first fixing area Fa. The blocking member 381b of the second blocking mechanism 380b may be fixed to the second plate 382b in the second fixing area Fb.

In various embodiments, a length of each of the fixing areas Fa and Fb of the blocking members 381a and 382b may be smaller than a length of an area in which the blocking member 381a and 381b extend without being fixed. For example, a ratio of each of the fixing areas Fa and Fb to the entirety of each of the blocking member 381a and 381b may be about 10%.

In various embodiments, the blocking member 381a and 381b may extend in the height direction (e.g., the z-axis direction) of the foreign substance blocking mechanism 380.

In various embodiments, the plurality of blocking members 381a. 381b may extend while having various lengths in the height direction of the foreign substance blocking mechanism 380. For example, in the first blocking mechanism 380a, the blocking member 381a extending to have a first member height a1, the blocking member 381a extending to have a second member height a2, and the blocking member 381a extending to have a third member height a3 may be alternately disposed in the longitudinal direction (e.g., the y-axis direction) of the rack cover 390. With reference to FIG. 13, the third member height a3 may be larger than the first member height a1 and smaller than the second member height a2.

FIG. 13 illustrates that the blocking members 381a have the first member height a1, the second member height a2, and the third member height a3, but this embodiment is provided for illustration only. The length of the blocking member 381a may not be limited thereto.

In various embodiments, based on the height direction (e.g., the z-axis direction) of the foreign substance blocking mechanism 380, the length of the blocking member 381a may be about 0.5 mm to 10 mm. For example, the first member height a1, the second member height a2, and/or the third member height a3 may be about 0.5 mm to 10 mm. Particularly, based on the height direction (e.g., the z-axis direction) of the foreign substance blocking mechanism 380, the length of the blocking member 381a may be 3 mm to 5 mm.

FIG. 13 illustrates that the blocking members 381a having various lengths (e.g., the first member height a1, the second member height a2, and the third member height a3) are alternately disposed in the longitudinal direction (e.g., the y-axis direction) of the rack cover 390, but this embodiment is provided for illustration only. The blocking members 381a having the same lengths may be disposed in the longitudinal direction of the rack cover 390. For example, the plurality of blocking members 381a having the first member height a1 may be disposed side by side in the longitudinal direction of the rack cover 390.

In various embodiments, like the blocking member 381a of the first blocking mechanism 380a, the blocking members 381b of the second blocking mechanism 380b may have various lengths in the height direction of the foreign substance blocking mechanism 380. The blocking members 381b having various lengths may be alternately disposed in the longitudinal direction (e.g., the y-axis direction) of the rack gear 340. This embodiment is also provided for illustration only, and the blocking members 381b having the same length may be disposed.

In various embodiments, the blocking member 381a having a relatively long length and the blocking member 381a having a relatively short length may be alternately disposed in the longitudinal direction (e.g., the y-axis direction) of the electronic device 300. For example, the blocking member 381a, which has the first member height a1, and the blocking member 381a, which has the second member height a2 larger than the first member height a1, may be alternately disposed in the longitudinal direction (e.g., the y-axis direction) of the electronic device 300.

FIG. 14 is a view illustrating the first blocking mechanism 380a and the pinion gear 361 according to various embodiments of the present disclosure.

In various embodiments, at least a part of the first blocking mechanism 380a may be in contact with the gear shaft 365. For example, the blocking member 381a of the first blocking mechanism 380a may include a contact area Ca, and the blocking member 381a is in contact with the gear shaft 365 in the contact area Ca.

In various embodiments, the gear shaft 365 may extend while penetrating the pinion gear 361.

In various embodiments, the contact area Ca of the blocking member 381a of the first blocking mechanism 380a may be formed at one end of the blocking member 381a.

In various embodiments, when the rack cover 390 slides, the blocking member 381a connected to the rack cover 390 may also slide. The blocking member 381a may come into contact with the gear shaft 365 in the contact area Ca while sliding.

In various embodiments, the contact area Ca in which the blocking member 381a is in contact with the gear shaft 365 may be positioned at one end of the blocking member 381a.

In various embodiments, the blocking member 381a may be deformed in shape in the contact area Ca. For example, because the blocking member 381a is fixed to the first fixing plate 382a in the fixing area Fa without being fixed to another area in the contact area Ca, the blocking member 381a may be deformed in shape by an external force. Because the blocking member 381a may be deformed in shape as a part (e.g., the contact area Ca) of the blocking member 381a comes into contact with the gear shaft 365, no resistance may be applied against the movement of the gear shaft 365.

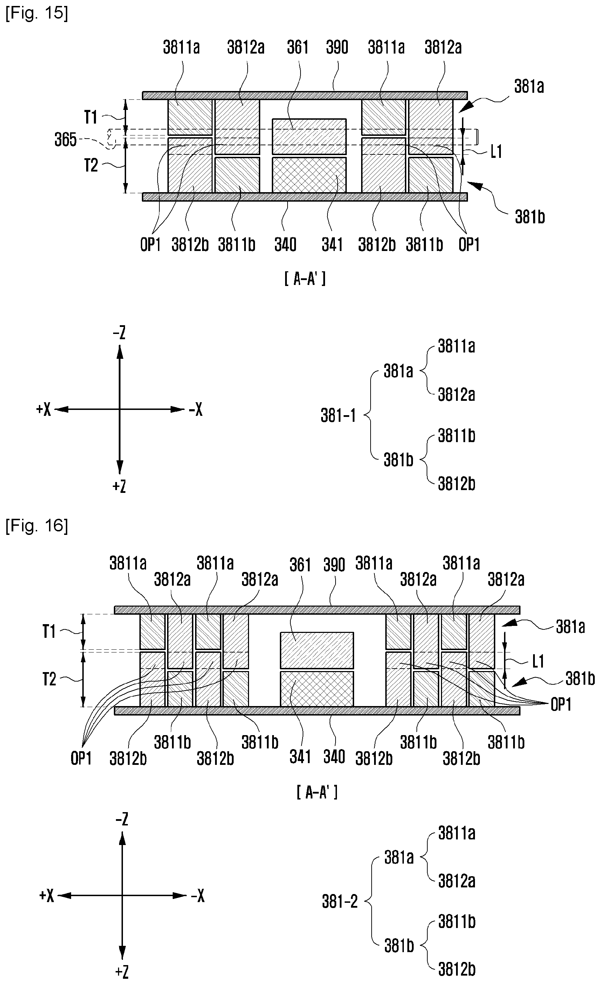

FIG. 15 is a view illustrating an arrangement of blocking members 381-1 according to the embodiment of the present disclosure.

FIG. 15 is a view illustrating an arrangement of the blocking members 381-1 in a cross-sectional view taken along line A-A' in FIG. 10.

With reference to FIG. 15, the blocking members 381-1 according to the embodiment of the present disclosure may include an ath blocking member 381a and/or a bth blocking member 381b. The ath blocking member 381a may be disposed on one surface of the rack cover 390, and the bth blocking member 381b may be disposed on one surface of the rack gear 340.

In various embodiments, the ath blocking member 381a may mean the blocking member 381-1 included in the first blocking mechanism 380a (see FIG. 13). The bth blocking member 381b may be the blocking member 381-1 included in the second blocking mechanism 380b (see FIG. 13).

In various embodiments, a height direction of the blocking member 381-1 may be a direction parallel to the height direction of the electronic device 300, and a width direction of the blocking member 381-1 may be a direction parallel to the width direction of the electronic device 300. For example, the height direction of the blocking member 381-1 may mean the z-axis direction, and the width direction of the blocking member 381-1 may mean the x-axis direction.

With reference to FIG. 15, the ath blocking member 381a according to the embodiment of the present disclosure may include a 1ath blocking member 3811a and/or a 2ath blocking member 3812a. The bth blocking member 381b may include a 1bth blocking member 3811b and/or a 2bth blocking member 3812b.

In various embodiments, the first blocking member 3811a or 3811b may mean the 1ath blocking member 3811a or the 1bth blocking member 3811b. The second blocking member 3812a or 3812b may mean the 2ath blocking member 3812a or the 2bth blocking member 3812b.

In various embodiments, the 2ath blocking member 3812a and the 2bth blocking member 3812b may further extend to be longer than the 1ath blocking member 3811a and the 1bth blocking member 3811b in the height direction of the blocking member 381-1. For example, based on the height direction (e.g., the z-axis direction) of the blocking member 381-1, the 1ath blocking member 3811a and the 1bth blocking member 3811b may each have a length corresponding to a first height T1, and the 2ath blocking member 3812a and the 2bth blocking member 3812b may each have a length corresponding to a second height T2. The second height T may be larger than the first height T1.

In the embodiment, the blocking members 381-1 may be disposed at one side and the other side of the engagement area 341 and the pinion gear 361. For example, the blocking member 381-1 may be disposed in one direction (e.g., the positive x-axis direction based on the pinion gear 361) of the pinion gear 361, and the blocking member 381-1 may be disposed in the other direction (e.g., the negative x-axis direction based on the pinion gear 361) of the pinion gear 361.

In various embodiments, the gear shaft 365 may penetrate at least a part of the pinion gear 361 and be connected to the pinion gear 361. For example, the gear shaft 365 may be connected to and penetrate the pinion gear 361 and extend in the x-axis direction that is the width direction of the blocking member 381-1. The gear shaft 365 may extend while coming into contact with at least a part of each of the blocking members 381-1 positioned at one side and the other side of the pinion gear 361.

In the embodiment, at one side and the other side of the engagement area 341 and the pinion gear 361, the ath blocking members 381a may be disposed in the order of the 1ath blocking member 3811a and the 2ath blocking member 3812a in the width direction (e.g., the x-axis direction) of the blocking member 381-1.

In the embodiment, at one side and the other side of the engagement area 341 and the pinion gear 361, the bth blocking members 381b may be disposed in the order of the 2bth blocking member 3812b and the 1bth blocking member 3811b in the width direction (e.g., the x-axis direction) of the blocking member 381-1.

In the embodiment, the 1ath blocking member 3811a of the ath blocking member 381a and the 2bth blocking member 3812b of the bth blocking member 381b may be disposed at positions (e.g., positions identical to each other in the width direction of the blocking member 381-1) corresponding to each other.

In the embodiment, the 2ath blocking member 3812a of the ath blocking member 381a and the 1bth blocking member 3811b of the bth blocking member 381b may be disposed at positions (e.g., positions identical to each other in the width direction of the blocking member 381-1) corresponding to each other.

In the embodiment, the 2ath blocking member 3812a and the 2bth blocking member 3812b at least partially overlap each other in the height direction (e.g., the z-axis direction) of the blocking member 381-1. For example, with reference to FIG. 15, the 2ath blocking member 3812a disposed on the rack cover 390 and the 2bth blocking member 3812b disposed on the rack gear 340 may overlap each other by a first length L1 in the height direction (e.g., the z-axis direction) of the blocking member 381-1. Because the 2ath blocking member 3812a and the 2bth blocking member 3812b at least partially overlap each other, it is possible to improve the effect of preventing an inflow of outside foreign substances.

In various embodiments, a portion where at least a part of the 2ath blocking member 3812a overlaps the 2bth blocking member 3812b in the height direction (e.g., the z-axis direction) may be defined as a first overlap area OP1.

In the embodiment, in a cross-sectional view taken along line A-A', the blocking members 381-1 may include a pair of first overlap areas OP1 respectively disposed at one side and the other side of the pinion gear 361. For example, with reference to FIG. 15, in a cross-sectional view taken along line A-A', the blocking members 381-1 may include the pair of first overlap areas OP1 respectively disposed at one side and the other side of the pinion gear 361.

FIG. 15 illustrates that the plurality of blocking members 381-1 is disposed at intervals, but this embodiment is just provided to easily describe an arrangement relationship between the blocking member 381-1. The arrangement of the blocking members 381-1 is not limited thereto. For example, the plurality of blocking members 381-1 may be disposed to be in contact with one another without being spaced apart from one another.

FIG. 16 is a view illustrating an arrangement of blocking members 381-2 according to another embodiment of the present disclosure.

FIG. 16 is a view illustrating an arrangement of the blocking members 381-2 in a cross-sectional view taken along line A-A' in FIG. 10.

With reference to FIG. 16, the blocking members 381-2 according to the embodiment of the present disclosure may include an ath blocking member 381a and/or a bth blocking member 381b. The ath blocking member 381a may be disposed on one surface of the rack cover 390, and the bth blocking member 381b may be disposed on one surface of the rack gear 340.

In various embodiments, a height direction of the blocking member 381-2 may be a direction parallel to the height direction of the electronic device 300, and a width direction of the blocking member 381-2 may be a direction parallel to the width direction of the electronic device 300. For example, the height direction of the blocking member 381-2 may mean the z-axis direction, and the width direction of the blocking member 381-2 may mean the x-axis direction.

With reference to FIG. 16, the ath blocking member 381a according to the embodiment of the present disclosure may include a 1ath blocking member 3811a and/or a 2ath blocking member 3812a. The bth blocking member 381b may include a 1bth blocking member 3811b and/or a 2bth blocking member 3812b.

In various embodiments, the 2ath blocking member 3812a and the 2bth blocking member 3812b may further extend to be longer than the 1ath blocking member 3811a and the 1bth blocking member 3811b in the height direction of the blocking member 381-2. For example, based on the height direction (e.g., the z-axis direction) of the blocking member 381-2, the 1ath blocking member 3811a and the 1bth blocking member 3811b may each have a length corresponding to a first height T1, and the 2ath blocking member 3812a and the 2bth blocking member 3812b may each have a length corresponding to a second height T2. The second height T2 may be larger than the first height T1.

In the embodiment, the blocking members 381-2 may be disposed at one side and the other side of the engagement area 341 and the pinion gear 361. For example, the blocking member 381-2 may be disposed in one direction (e.g., the positive x-axis direction based on the pinion gear 361) of the pinion gear 361, and the blocking member 381-2 may be disposed in the other direction (e.g., the negative x-axis direction based on the pinion gear 361) of the pinion gear 361.

In various embodiments, the gear shaft 365 (see FIG. 15) may penetrate at least a part of the pinion gear 361 and be connected to the pinion gear 361. The arrangement structure of the blocking members 381-2 illustrated in FIG. 16 does not have the gear shaft 365 (see FIG. 15), but this arrangement structure is provided to simplify the illustration of the drawings. The arrangement structure of the blocking members 381-2 illustrated in FIG. 16 may also include the gear shaft 365 (see FIG. 15). For example, the gear shaft 365 (see FIG. 15) may be connected to and penetrate the pinion gear 361 and extend in the x-axis direction that is the width direction of the blocking member 381-2. The gear shaft 365 (see FIG. 15) may extend while coming into contact with at least a part of each of the blocking members 381-2 positioned at one side and the other side of the pinion gear 361.

In the embodiment, at one side and the other side of the engagement area 341 and the pinion gear 361, the 1ath blocking member 3811a and the 2ath blocking member 3812a of the ath blocking members 381a disposed on the rack cover 390 may be alternately disposed in the width direction (e.g., the x-axis direction) of the blocking member 381-2. For example, the 1ath blocking member 3811a, the 2ath blocking member 3812a, the 1ath blocking member 3811a, and the 2ath blocking member 3812a may be alternately disposed in the negative x-axis direction.

In the embodiment, at one side and the other side of the engagement area 341 and the pinion gear 361, the 2bth blocking member 3812b and the 1bth blocking member 3811b of the bth blocking members 381b disposed on the rack gear 340 may be alternately disposed in the width direction (e.g., the x-axis direction) of the blocking member 381-2. For example, the 2bth blocking member 3812b, the 1bth blocking member 3811b, the 2bth blocking member 3812b, and the 1bth blocking member 3811b may be alternately disposed in the negative x-axis direction.

In comparison with the blocking member 381-1 (see FIG. 15) illustrated in FIG. 15, the blocking member 381-2 according to the embodiment illustrated in FIG. 16 may further include the blocking member 381-2 in the width direction (e.g., the x-axis direction) of the blocking member 381. For example, in comparison with the blocking member 381-1 in FIG. 15, the blocking member 381-2 in FIG. 16 may further include the 1ath blocking member 3811a, the 1bth blocking member 3811b, the 2ath blocking member 3812a, and the 2bth blocking member 3812b disposed in the x-axis direction (e.g., the positive x-axis direction or the negative x-axis direction) at the outer periphery of the blocking member 381-1 disposed at the outermost periphery in the x-axis direction based on the pinion gear 361.

With reference to FIG. 16, in the cross-sectional view taken along line A-A', at one side and the other side of the pinion gear 361, the ath blocking members 381a disposed on the rack cover 390 may include a plurality of 1ath blocking members 3811a and a plurality of 2ath blocking members 3812a. For example, in the cross-sectional view taken along line A-A', the ath blocking members 381a may include two 1ath blocking members 3811a and two 2ath blocking members 3812a in one direction of the pinion gear 361. Likewise, in the cross-sectional view taken along line A-A', at one side and the other side of the pinion gear 361, the bth blocking members 381b disposed on the rack gear 340 may also include a plurality of 1bth blocking members 3811b and a plurality of 2bth blocking members 3812b.

FIG. 16 illustrates that, in the cross-sectional view taken along line A-A', four ath blocking members 381a are disposed on the rack cover 390 and provided at each of one side and the other side of the pinion gear 361 in the width direction of the blocking member 381-2, but this embodiment is provided for illustration only. The number of ath blocking members 381a may not be limited thereto. For example, four or more ath blocking members 381a may be disposed on the rack cover 390 and provided at each of one side and the other direction of the pinion gear 361.

In the embodiment, the 2ath blocking member 3812a disposed on the rack cover 390 and the 2bth blocking member 3812b disposed on the rack gear 340 at least partially overlap each other in the height direction (e.g., the z-axis direction) of the blocking member 381-2. For example, with reference to FIG. 16, the 2ath blocking member 3812a disposed on the rack cover 390 and the 2bth blocking member 3812b disposed on the rack gear 340 may overlap each other by the first length L1 in the height direction (e.g., the z-axis direction) of the blocking member 381-2.

In the embodiment, and according to the present invention, because the 2ath blocking member 3812a and the 2bth blocking member 3812b are disposed to at least partially overlap each other, it is possible to improve the effect of preventing an inflow of outside foreign substances.

In various embodiments, a portion where at least a part of the 2ath blocking member 3812a overlaps the 2bth blocking member 3812b in the height direction (e.g., the z-axis direction) may be defined as the first overlap area OP1.

In the embodiment, in a cross-sectional view taken along line A-A', the blocking members 381-2 may include two pairs of first overlap areas OP1 respectively disposed at one side and the other side of the pinion gear 361.

In comparison with the blocking member 381-1 in FIG. 15, the blocking member 381-2 in FIG. 16 may include more first overlap areas OP1 at one side and the other side of the pinion gear 361. As the number of first overlap areas OP1 increases, outside foreign substances are hardly introduced into the first overlap areas OP1. Therefore, the blocking member 381-2 in FIG. 16 may be more advantageous in preventing an inflow of foreign substances in comparison with the blocking member 381-1 in FIG. 15.

FIG. 16 illustrates that the plurality of blocking members 381-2 is disposed at intervals, but this embodiment is just provided for illustration only. The arrangement of the blocking members 381-2 is not limited thereto. For example, the plurality of blocking members 381-2 may be disposed to be in contact with one another without being spaced apart from one another.

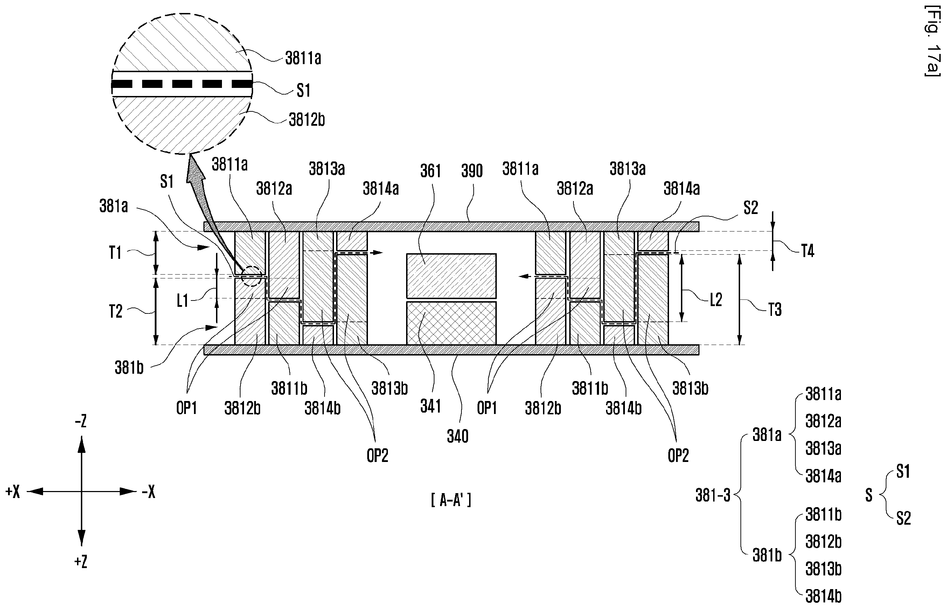

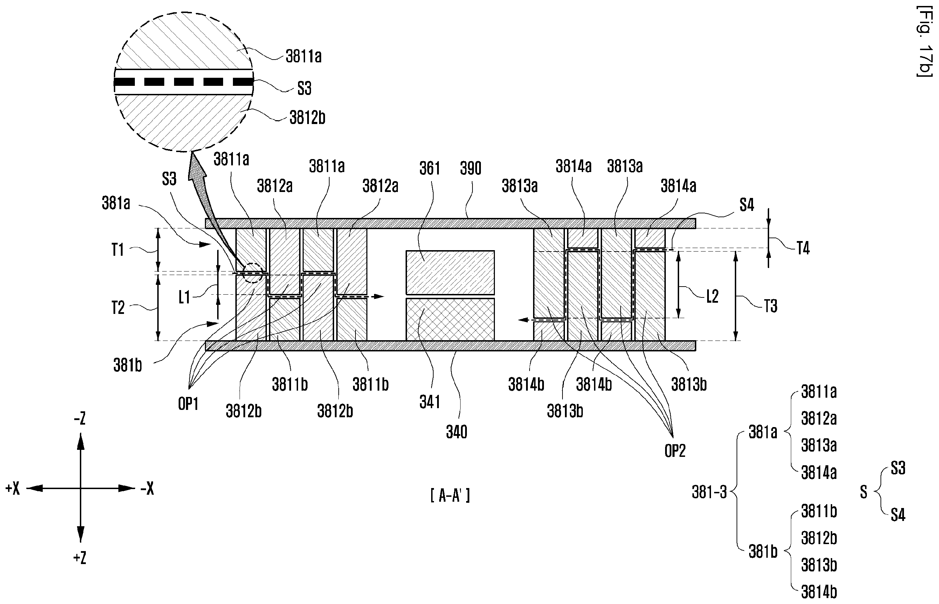

FIGS. 17A and 17B are views illustrating an arrangement of blocking members 381-3 according to still another embodiment of the present disclosure.

With reference to FIGS. 17A and 17B, the blocking members 381-3 according to the embodiment of the present disclosure may include an ath blocking member 381a and/or a bth blocking member 381b. The ath blocking member 381a may be disposed on one surface of the rack cover 390, and the bth blocking member 381b may be disposed on one surface of the rack gear 340.

In various embodiments, a height direction of the blocking member 381-3 may be a direction parallel to the height direction of the electronic device 300, and a width direction of the blocking member 381-3 may be a direction parallel to the width direction of the electronic device 300. For example, the height direction of the blocking member 381-3 may mean the z-axis direction, and the width direction of the blocking member 381-3 may mean the x-axis direction.

With reference to FIG. 17A, the ath blocking member 381a according to the embodiment of the present disclosure may include a 1ath blocking member 3811a, a 2ath blocking member 3812a, a 3ath blocking member 3813a, and/or a 4ath blocking member 3814a. The bth blocking member 381b may include a 1bth blocking member 3811b, a 2bth blocking member 3812b, a 3bth blocking member 3813b, and/or a 4bth blocking member 3814b.

In various embodiments, the first blocking member 3811a or 3811b may mean the 1ath blocking member 3811a or the 1bth blocking member 3811b. The second blocking member 3812a or 3812b may mean the 2ath blocking member 3812a or the 2bth blocking member 3812b. The third blocking member 3813a or 3813b may mean the 3ath blocking member 3813a or the 3bth blocking member 3813b. The fourth blocking member 3814a or 3814b may mean the 4ath blocking member 3814a or the 4bth blocking member 3814b.

In the embodiment, the 2ath blocking member 3812a and the 2bth blocking member 3812b may further extend to be longer than the 1ath blocking member 3811a and the 1bth blocking member 3811b in the height direction of the blocking member 381-3. For example, based on the height direction (e.g., the z-axis direction) of the blocking member 381-3, the 1ath blocking member 3811a and the 1bth blocking member 3811b may each have a length corresponding to a first height T1, and the 2ath blocking member 3812a and the 2bth blocking member 3812b may each have a length corresponding to a second height T2. The second height T2 may be larger than the first height T1.

In the embodiment, the 3ath blocking member 3813a and the 3bth blocking member 3813b may further extend to be longer than the 2ath blocking member 3812a and the 2bth blocking member 3812b in the height direction of the blocking member 381-3. For example, based on the height direction (e.g., the z-axis direction) of the blocking member 381-3, the 3ath blocking member 3813a and the 3bth blocking member 3813b may each have a length corresponding to a third height T3. The third height T3 may be larger than the second height T2.

In the embodiment, the 4ath blocking member 3814a and the 4bth blocking member 3814b may extend to be shorter than the 1ath blocking member 3811a and the 1bth blocking member 3811b in the height direction of the blocking member 381-3. For example, based on the height direction (e.g., the z-axis direction) of the blocking member 381-3, the 4ath blocking member 3814a and the 4bth blocking member 3814b may each have a length corresponding to the fourth height T4. The fourth height T4 may be smaller than the first height T1.

In the embodiment, the 1ath blocking member 381 1a of the ath blocking member 381a disposed on the rack cover 390 and the 2bth blocking member 3812b of the bth blocking member 381b disposed on the rack gear 340 may be disposed at positions (e.g., positions identical to each other in the width direction of the blocking member 381-3) correspond to each other.

In the embodiment, the 2ath blocking member 3812a of the ath blocking member 381a disposed on the rack cover 390 and the 1bth blocking member 3811b of the bth blocking member 381b disposed on the rack gear 340 may be disposed at positions (e.g., positions identical to each other in the width direction of the blocking member 381-3) corresponding to each other.

In the embodiment, the 3ath blocking member 3813a of the ath blocking member 381a disposed on the rack cover 390 and the 4bth blocking member 3814b of the bth blocking member 381b disposed on the rack gear 340 may be disposed at positions (e.g., positions identical to each other in the width direction of the blocking member 381-3) correspond to each other.

In the embodiment, the 4ath blocking member 3814a of the ath blocking member 381a disposed on the rack cover 390 and the 3bth blocking member 3813b of the bth blocking member 381b disposed on the rack gear 340 may be disposed at positions (e.g., positions identical to each other in the width direction of the blocking member 381-3) corresponding to each other.

In the embodiment, the blocking members 381-3 may be disposed at one side and the other side of the engagement area 341 and the pinion gear 361 based on the width direction of the electronic device 300. For example, the blocking member 381-3 may be disposed in one direction (e.g., the positive x-axis direction based on the pinion gear 361) of the pinion gear 361, and the blocking member 381-3 may be disposed in the other direction (e.g., the negative x-axis direction based on the pinion gear 361) of the pinion gear 361.

In various embodiments, the gear shaft 365 (see FIG. 15) may penetrate at least a part of the pinion gear 361 and be connected to the pinion gear 361. The arrangement structure of the blocking members 381-3 illustrated in FIGS. 17A and 17B does not have the gear shaft 365 (see FIG. 15), but this arrangement structure is provided to simplify the illustration of the drawings. The arrangement structure of the blocking members 381-3 illustrated in FIGS. 17A and 17B may also include the gear shaft 365 (see FIG. 15). For example, the gear shaft 365 (see FIG. 15) may be connected to and penetrate the pinion gear 361 and extend in the x-axis direction that is the width direction of the blocking member 381-3. The gear shaft 365 (see FIG. 15) may extend while coming into contact with at least a part of each of the blocking members 381-3 positioned at one side and the other side of the pinion gear 361.

With reference to FIG. 17A, at one side and the other side of the engagement area 341 and the pinion gear 361, the ath blocking members 381a disposed on the rack cover 390 may be disposed in the order of the 1ath blocking member 3811a, the 2ath blocking member 3812a, the 3ath blocking member 3813a, and the 4ath blocking member 3814a in the width direction (e.g., the negative x-axis direction) of the blocking member 381-3.

With reference to FIG. 17A, at one side and the other side of the engagement area 341 and the pinion gear 361, the bth blocking members 381b disposed on one surface of the rack gear 340 may be disposed in the order of the 2bth blocking member 3812b, the 1bth blocking member 3811b, the 4bth blocking member 3814b, and the 3bth blocking member 3813b in the width direction (e.g., the negative x-axis direction) of the blocking member 381-3.

In various embodiments, the 2ath blocking member 3812a disposed on the rack cover 390 and the 2bth blocking member 3812b disposed on the rack gear 340 may at least partially overlap each other in the height direction (e.g., the z-axis direction) of the blocking members 381a and 381b. For example, with reference to FIG. 17A, the 2ath blocking member 3812a disposed on the rack cover 390 and the 2bth blocking member 3812b disposed on the rack gear 340 may overlap each other by the first length L1 in the height direction (e.g., the z-axis direction) of the blocking member 381-3.

In various embodiments, the 3ath blocking member 3813a disposed on the rack cover 390 and the 3bth blocking member 3813b disposed on the rack gear 340 may at least partially overlap each other in the height direction (e.g., the z-axis direction) of the blocking member 381-3. For example, with reference to FIG. 17A, the 3ath blocking member 3813a disposed on the rack cover 390 and the 3bth blocking member 3813b disposed on the rack gear 340 may overlap each other by a second length L2 in the height direction (e.g., the z-axis direction) of the blocking member 381-3.

In various embodiments, a portion where at least a part of the 2ath blocking member 3812a overlaps the 2bth blocking member 3812b in the height direction (e.g., the z-axis direction) may be defined as the first overlap area OP1.

In various embodiments, a portion where at least a part of the 3ath blocking member 3813a overlaps the 3bth blocking member 3813b in the height direction (e.g., the z-axis direction) may be defined as a second overlap area OP2.

In various embodiments, the blocking members 381-3 may include the first overlap areas OP1 and the second overlap areas OP2 at one side and the other side of the pinion gear 361. For example, with reference to FIG. 17A, in the cross-sectional view taken along line A-A', the blocking members 381-3 may include the first overlap areas OP1 and the second overlap areas OP2 at one side and the other direction of the pinion gear 361.

FIG. 17A may illustrate an arrangement of the blocking members 381-3 having foreign substance inflow paths S formed at one side and the other side of the pinion gear 361 and having the same length.

With reference to FIG. 17A, a first foreign substance inflow path S1 and/or a second foreign substance inflow path S2 may be formed from the blocking member 381-3 toward the pinion gear 361 and the engagement area 341. For example, with reference to FIG. 17A, foreign substances (not illustrated) may be introduced from one side of the blocking member 381-3 toward the pinion gear 361 and the engagement area 341 along the first foreign substance inflow path S1. Foreign substances (not illustrated) may be introduced from the other side of the blocking member 381-3 toward the pinion gear 361 and the engagement area 341 along the second foreign substance inflow path S2. In the embodiment illustrated in FIG. 17A, the length of the second foreign substance inflow path S2 may be equal to the length of the first foreign substance inflow path S1.

In various embodiments, as the length of the foreign substance inflow path S increases, the foreign substances (not illustrated) may be hardly introduced into the pinion gear 361 and the engagement area 341. For example, when the length of the foreign substance inflow path S increases, the foreign substances (not illustrated) need to move a relatively long distance and thus may be hardly introduced into the pinion gear 361 and the engagement area 341.

FIG. 17B illustrates an arrangement of the blocking members 381-3 having foreign substance inflow paths S formed at one side and the other side of the pinion gear 361 and having different lengths.

With reference to FIG. 17B, at one side of the engagement area 341 and the pinion gear 361, the ath blocking members 381a disposed on one surface of the rack gear 340 may be disposed in the order of the 1ath blocking member 3811a, the 2ath blocking member 3812a, the 1ath blocking member 3811a, and the 2ath blocking member 3812a in the width direction (e.g., the negative x-axis direction) of the blocking member 381-3. At the other side of the engagement area 341 and the pinion gear 361, the ath blocking members 381a may be disposed in the order of the 3ath blocking member 3813a, the 4ath blocking member 3814a, the 3ath blocking member 3813a, and the 4ath blocking member 3814a in the width direction (e.g., the negative x-axis direction) of the blocking member 381-3.

With reference to FIG. 17B, at one side of the engagement area 341 and the pinion gear 361, the bth blocking members 381b disposed on one surface of the rack gear 340 may be disposed in the order of the 2bth blocking member 3812b, the 1bth blocking member 3811b, the 2bth blocking member 3812b, and the 1bth blocking member 3811b in the width direction (e.g., the negative x-axis direction) of the blocking member 381-3. At the other side of the engagement area 341 and the pinion gear 361, the bth blocking members 381b may be disposed in the order of the 4bth blocking member 3814b, the 3bth blocking member 3813b, the 4bth blocking member 3814b, and the 3bth blocking member 3813b in the width direction (e.g., the negative x-axis direction) of the blocking member 381-3.

With reference to FIG. 17B, the blocking members 381-3 may define the first overlap area OP1 at one side of the pinion gear 361 and define the second overlap area OP2 at the other side of the pinion gear 361.

With reference to FIG. 17B, a third foreign substance inflow path S3 and/or a fourth foreign substance inflow path S4 may be formed from the blocking member 381-3 toward the pinion gear 361 and the engagement area 341 according to the embodiment of the present disclosure. For example, with reference to FIG. 17B, foreign substances (not illustrated) may be introduced from one side of the blocking member 381-3 toward the pinion gear 361 and the engagement area 341 along the third foreign substance inflow path S3. Foreign substances (not illustrated) may be introduced from the other side of the blocking member 381-3 toward the pinion gear 361 and the engagement area 341 along the fourth foreign substance inflow path S4.

In the embodiment illustrated in FIG. 17B, the length of the fourth foreign substance inflow path S4 may be longer than the length of the third foreign substance inflow path S3. For example, because the length (e.g., the second length L2) of the second overlap area OP2 is longer than the length (e.g., the first length L1) of the first overlap area OP1, the fourth foreign substance inflow path S4 passing through the second overlap area OP2 may be longer than the third foreign substance inflow path S3 passing through the first overlap area OP1.

In various embodiments, the foreign substance inflow path S may be relatively long in the area in which the effect of preventing an inflow of foreign substances needs to be improved. For example, in comparison with one side of the pinion gear 361 (e.g., the side surface in the positive x-axis direction based on the pinion gear 361), the other side of the pinion gear 361 (e.g., the side surface in the negative x-axis direction based on the pinion gear 361) may be an area in which the foreign substances are easily introduced. In this case, in the embodiment illustrated in FIG. 17B, the fourth foreign substance inflow path S4 formed in the other direction of the pinion gear 361 may be relatively longer than the third foreign substance inflow path S3 formed in one direction of the pinion gear 361. For example, with reference to FIG. 17B, the blocking members 381-3 positioned at the outer periphery in the other direction of the pinion gear 361 may be the 3ath blocking member 3813a and the 3bth blocking member 3813b that overlap each other by the second length L2 to lengthen the foreign substance inflow path S. Because the 3ath blocking member 3813a and the 3bth blocking member 3813b define the fourth foreign substance inflow path S4 having a relatively long distance at the outer periphery in the other direction of the pinion gear 361, it is possible to improve the effect of preventing an inflow of foreign substances in the other direction of the pinion gear 361.

In various embodiments, in case that the foreign substance inflow path S is relatively long, it is possible to improve the effect of preventing an inflow of foreign substances in comparison with a case in which the foreign substance inflow path S is relatively short.

In various embodiments, in case that the foreign substance inflow path S is relatively short, the gear shaft 365 (see FIG. 15) is in contact with the blocking member 381-3 with a small area, such that the rack gear 340 may easily slide in comparison with a case in which the foreign substance inflow path S is relatively long.

The electronic device 300 according to the embodiment of the present disclosure may include: the first housing 370; the second housing 320 slidably coupled to the first housing 370; the flexible display 310 configured to expand or reduce a size of a display area visible to the outside of the electronic device 300 based on slide-in or slide-out of the second housing 320; the drive motor 350 disposed to provide driving force to drive the second housing 320; the pinion gear 361 coupled to the drive motor 350; the rack gear 340 disposed to be driven to engage with the pinion gear 361; and the rack cover 390 coupled to the rack gear 340.

In the embodiment, the rack cover 390 may include a first blocking mechanism 380a blocking foreign substances from entering the rack cover 390.

In the embodiment, the rack gear 340 may include a second blocking mechanism 380b blocking foreign substances from entering the rack gear 340. The electronic device 300 provides a structure for preventing foreign substances from being introduced into the rack gear 340 and the pinion gear 361, and thus enables the rack gear 340 to easily perform a rectilinear sliding motion.

In the embodiment, the first blocking mechanism 380a is disposed on one surface of the rack cover 390 facing the rack gear 340 and extends in a direction toward the rack gear 340.

In the embodiment, the second blocking mechanism 380b is disposed on one surface of the rack gear 340 facing the rack cover 390 and extends in a direction toward the rack cover 390. The first blocking mechanism 380a and the second blocking mechanism 380b prevent outside foreign substances form being introduced into the engagement area 341 of the rack gear 340.

In the embodiment, the first blocking mechanism 380a and the second blocking mechanism 380b may each include: a plurality of blocking members 381 each including a fiber material and extending in the height direction (e.g., the z-axis direction) of the electronic device 300; the fixing plate 382 having one surface on which the plurality of blocking members 381 is disposed; and the bonding member 383 disposed on the fixing plate 382. Since the plurality of blocking members 381 include a fiber material, the frictional resistance of the blocking member 381 and the gear shaft 365 (see FIG. 10) decreases, which makes it easier for the rack gear 340 to slide. In other words, the low frictional resistance of the blocking member 381 allows the rack gear 340 to perform a rectilinear sliding motion with an ease. In addition, the overall structure of the blocking mechanism 380a and 380b prevents the foreign substances form being introduced into the engagement area 341 of the rack gear 340 and the pinion gear 361, thereby improving the driving performance between the housings 320 and 370.

In the embodiment, the first blocking mechanism 380a may be bonded to the rack cover 390 by the bonding member 383.

In the embodiment, the second blocking mechanism 380b may be bonded to the rack gear 340 by the bonding member 383.

In the embodiment, the bonding member 383 may include a double-sided tape. The bonding member 383 being a double-sided tape provides an enhanced adhesion between the rack cover 390 and the first blocking mechanism 380a, and between the second blocking mechanism 380b and the rack gear 340.

In the embodiment, the first blocking mechanism 380a and the second blocking mechanism 380b may each include: the plurality of blocking members 381 each including a fiber material and extending in the height direction (e.g., the z-axis direction) of the electronic device 300; and the fixing plate 382 having one surface on which the plurality of blocking members 381 is disposed. The plurality of blocking members 381 may each include the fixing areas Fa and Fb at least partially fixed to the fixing plate 382. Since the plurality of blocking members 381 include a fiber material, the frictional resistance of the blocking member 381 and the gear shaft 365 (see FIG. 10) decreases, which makes it easier for the rack gear 340 to slide. In other words, the low frictional resistance of the blocking member 381 allows the rack gear 340 to perform a rectilinear sliding motion with an ease. In addition, a length of each of the fixing areas Fa and Fb of the blocking members 381 (a length of an area at least partially fixed to the fixing plate) may be smaller than a length of an area in which the blocking member extend without being fixed. Thus, the blocking members 381 are able to extend in a height direction of the foreign substance blocking mechanism 380 so as to improve the effect of preventing inflow of foreign substances into the engagement area 341 of the rack gear 340.

In the embodiment, the first blocking mechanism 380a and the second blocking mechanism 380b may each include: the first blocking member 3811a or 3811b extending in the height direction (e.g., the z-axis direction) of the electronic device 300; and the second blocking member 3812a or 3812b extending to be longer than the first blocking member 3811a or 3811b in the height direction of the electronic device 300.

In the embodiment, the first blocking member 3811a of the first blocking mechanism 380a may be disposed at the position corresponding to the second blocking member 3812b of the second blocking mechanism 380b, and the second blocking member 3812a of the first blocking mechanism 380a may be disposed at the position corresponding to the first blocking member 3811b of the second blocking mechanism 380b. Such an arrangement creates overlapping region between the blocking members which makes the entry of foreign substances more difficult.

In the embodiment, in each of the first blocking mechanism 380a and the second blocking mechanism 380b, the first blocking member 3811a or 3811b and the second blocking member 3812a or 3812b may be alternately disposed in the longitudinal direction (e.g., the y-axis direction) of the electronic device 300. Such an arrangement of alternately disposing blocking members in longitudinal direction creates overlapping region between the blocking members which makes the entry of foreign substances more difficult.

In the embodiment, the blocking members 381 in the first blocking mechanism 380a may be disposed in the order of the first blocking member 3811a and the second blocking member 3812b in the width direction (e.g., the x-axis direction) of the electronic device 300. In the second blocking mechanism 380b, the blocking members 381 may be disposed in the order of the second blocking member 3812b and the first blocking member 3811b in the width direction (e.g., the x-axis direction) of the electronic device 300. The second blocking member 3812a of the first blocking mechanism 380a and the second blocking member 3812b of the second blocking mechanism 380b may overlap each other by the first length L1 in the height direction (e.g., the z-axis direction) of the electronic device 300. The portion where the second blocking member 3812a of the first blocking mechanism 380a and the second blocking member 3812b of the second blocking mechanism 380b overlap each other in a height direction is a first overlap area OP1, and due to this first overlap area OP1, the entry of foreign substances into the electronic device 300 is restricted and it is possible to improve the effect of preventing an inflow of outside foreign substances.

In the embodiment, the blocking members 381 in the first blocking mechanism 380a may be alternately disposed in the order of the first blocking member 3811a, the second blocking member 3812b, the first blocking member 3811a, and the second blocking member 3812b in the width direction (e.g., the x-axis direction) of the electronic device 300. The blocking members 381 in the second blocking mechanism 380b may be alternately disposed in the order of the second blocking member 3812b, the first blocking member 3811b, the second blocking member 3812b, and the first blocking member 3811b in the width direction (e.g., the x-axis direction) of the electronic device 300. The second blocking member 3812a of the first blocking mechanism 380a and the second blocking member 3812b of the second blocking mechanism 380b may overlap each other by the first length L1 in the height direction (e.g., the z-axis direction) of the electronic device 300. A portion where the second blocking member 3812a of the first blocking mechanism 380a and the second blocking member 3812b of the second blocking mechanism 380b overlap each other in the height direction is a first overlap area OP1. Further, due to the presence of multiple blocking members across the width or longitudinal direction, more first overlap areas OP1 shall be formed at each side of the pinon gear 361. As the number of first overlap areas OP1 increases, outside foreign substances are hardly introduced into the first overlap areas OP1. In other words, multiple first overlap areas OP1 act as subsequently protection from the inflow of foreign substances. Thus, the entry of foreign substances into the electronic device 300 is restricted and it is possible to significantly improve the effect of preventing an inflow of outside foreign substances.

In the embodiment, the first blocking mechanism 380a and the second blocking mechanism 380b may each further include: the third blocking member 3813a or 3813b extending to be longer than the second blocking member 3812a or 3812b in the height direction of the electronic device 300; and the fourth blocking member 3814a or 3814b extending to be shorter than the first blocking member 3811a or 3811b in the height direction of the electronic device 300.

In the embodiment, the third blocking member 3813a of the first blocking mechanism 380a may be disposed at the position corresponding to the fourth blocking member 3814b of the second blocking mechanism 380b, and the fourth blocking member 3812a of the first blocking mechanism 380a may be disposed at the position corresponding to the third blocking member 3813b of the second blocking mechanism 380b.

In the embodiment, the blocking members 381 in the first blocking mechanism 380a may be disposed in the order of the first blocking member 3811a, the second blocking member 3812b, the third blocking member 3813a, and the fourth blocking member 3814b in the width direction (e.g., the x-axis direction) of the electronic device 300. The blocking members 381 in the second blocking mechanism 380b may be disposed in the order of the second blocking member 3812b, the first blocking member 3811b, the fourth blocking member 3814b, and the third blocking member 3813b in the width direction (e.g., the x-axis direction) of the electronic device 300. The second blocking member 3812a of the first blocking mechanism 380a and the second blocking member 3812b of the second blocking mechanism 380b may overlap each other by the first length L1 in the height direction (e.g., the z-axis direction) of the electronic device 300. The third blocking member 3813a of the first blocking mechanism 380a and the third blocking member 3813b of the second blocking mechanism 380b may overlap each other by the second length L2 in the height direction 300 of the electronic device. The second length L2 may be larger than the first length L1. A first overlap area OP1 is formed by the overlapping of the second blocking member 3812a of the first blocking mechanism 380a and the second blocking member 3812b of the second blocking mechanism 380b in the height direction, and a second overlap area OP2 is formed by the overlapping of the third blocking member 3813a of the first blocking mechanism 380a and the third blocking member 3813b of the second blocking mechanism 380b in the height direction. In other words, due to the introduction of the third blocking member, being longer than the second blocking member, it is possible to form two different overlapping areas of different sizes. Thus, the arrangement of blocking members includes the first overlap area OP1 at one side of the pinion gear and the second overlap area OP2 at another side of the pinion gear. As the number of overlap areas of different sizes increases, outside foreign substances are hardly introduced into the overlap areas of different sizes. In other words, multiple overlap areas of different sizes act as subsequently protection from the inflow of foreign substances. Thus, the entry of foreign substances into the electronic device 300 is restricted and it is possible to significantly improve the effect of preventing an inflow of outside foreign substances.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. The electronic devices according to embodiments of the disclosure are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., module or program) of the above-described components may include a singular or a plurality of entities, and some of the plurality of entities may be separately disposed in any other component. According to various embodiments, one or more components or operations among the above-described components may be omitted, or one or more other components or operations may be added. Alternatively or additionally, a plurality of components (e.g., module or program) may be integrated into one component. In this case, the integrated component may perform one or more functions of each component of the plurality of components identically or similarly to those performed by the corresponding component among the plurality of components prior to the integration. According to various embodiments, operations performed by a module, program, or other component may be executed sequentially, in parallel, repeatedly, or heuristically, or one or more of the operations may be executed in a different order or omitted, or one or more other operations may be added.

## Claims

1. An electronic device comprises:
a first housing (370);
a second housing (320) slidably coupled to the first housing (370);
a flexible display (310) configured to expand or reduce a size of a display area visible to the outside of the electronic device based on slide-in or slide-out of the second housing (320);
a drive motor (350) disposed to provide driving force to drive the second housing (320);
a pinion gear (361) coupled to the drive motor (350);
a rack gear (340) disposed to be driven to engage with the pinion gear (361);
a rack cover (390) coupled to the rack gear (340), and
a foreign substance blocking mechanism (380) disposed between the rack cover and the rack gear to block foreign substances from entering the rack gear,
wherein the foreign substance blocking mechanism includes a first blocking mechanism (380a) and a second blocking mechanism (380b) disposed at a position corresponding to the first blocking mechanism,
and
wherein the first blocking mechanism overlaps with the second blocking mechanism.

2. The electronic device of any of claim 1,
wherein the first blocking mechanism (380a) is disposed on one surface of the rack cover (390) facing the rack gear (340) and extends in a direction toward the rack gear (340), and wherein the second blocking mechanism (380b) is disposed on one surface of the rack gear (340) facing the rack cover (390) and extends in a direction toward the rack cover (390).

3. The electronic device of claim 1, wherein the first blocking mechanism (380a) and the second blocking mechanism (380b) each comprises:
a plurality of blocking members (381) each of which includes a fiber material and extends in a height direction of the electronic device;
a fixing plate (382) having one surface on which the plurality of blocking members (381) is disposed; and
a bonding member (383) disposed on the fixing plate (382).

4. The electronic device of claim 3,
wherein the first blocking mechanism (380a) is bonded to the rack cover (390) by using the bonding member (383),
wherein the second blocking mechanism (380b) is bonded to the rack gear (340) by using the bonding member (383), and
wherein the bonding member (383) comprises a double-sided tape.

5. The electronic device of claim 1, wherein the first blocking mechanism (380a) and the second blocking mechanism (380b) each comprises:
a plurality of blocking members (381a, 381b) each of which includes a fiber material and extends in a height direction of the electronic device; and
a fixing plate (382a, 382b) having one surface on which the plurality of blocking members (381a, 381b) is disposed, and
wherein each of the plurality of blocking members (381a, 381b) comprises a fixing area (Fa, Fb) at least partially fixed to the fixing plate (382a, 382b).

6. The electronic device of claim 1, wherein the first blocking mechanism (381a) and the second blocking mechanism (381b) each comprises:
a first blocking member (3811a, 3811b) extending in a height direction of the electronic device; and
a second blocking member (3812a, 3812b) extending to be longer than the first blocking member (3811a, 3811b) in the height direction of the electronic device,
wherein the first blocking member (3811a) of the first blocking mechanism (380a) is disposed at a position corresponding to the second blocking member (3812b) of the second blocking mechanism (380b), and
wherein the second blocking member (3812a) of the first blocking mechanism (380a) is disposed at a position corresponding to the first blocking member (3811b) of the second blocking mechanism (380b).

7. The electronic device of claim 1, wherein the first blocking mechanism (381a) and the second blocking mechanism (381b) each comprises:
a first blocking member (3811a, 3811b) extending in a height direction of the electronic device; and
a second blocking member (3812a, 3812b) extending to be longer than the first blocking member (3811a, 3811b) in the height direction of the electronic device, and
wherein the first blocking member (3811a, 3811b) and the second blocking member (3812a, 3812b) are alternately disposed in the longitudinal direction of the electronic device.

8. The electronic device of claim 1, wherein the first blocking mechanism (381a) and the second blocking mechanism (381b) each comprises:
a first blocking member (3811a, 3811b) extending in a height direction of the electronic device; and
a second blocking member (3812a, 3812b) extending to be longer than the first blocking member (3811a, 3811b) in the height direction of the electronic device,
wherein the blocking members (3811a, 3812a) in the first blocking mechanism (381a) are disposed in a width direction of the electronic device in the order of the first blocking member (3811a) and the second blocking member (3812a),
wherein the blocking members (3812b, 3811b) in the second blocking mechanism (381b) are disposed in the width direction of the electronic device in the order of the second blocking member (3812b) and the first blocking member (3811b), and
wherein the second blocking member (3812a) of the first blocking mechanism (381a) and the second blocking member (3812b) of the second blocking mechanism (381b) overlap each other by a first length (L1) in the height direction of the electronic device.

9. The electronic device of claim 1, wherein the first blocking mechanism (381a) and the second blocking mechanism (381b) each comprises:
a first blocking member (3811a, 3811b) extending in a height direction of the electronic device; and
a second blocking member (3812a, 3812b) extending to be longer than the first blocking member in the height direction of the electronic device,
wherein the blocking members (3811a, 3812a) in the first blocking mechanism (381a) are alternately disposed in the order of the first blocking member (3811a), the second blocking member (3812a), the first blocking member (3811a), and the second blocking member (3812a) in a width direction of the electronic device,
wherein the blocking members (3812b, 3811b) in the second blocking mechanism (381b) are alternately disposed in the order of the second blocking member (3812b), the first blocking member (3811b), the second blocking member (3812b), and the first blocking member (3811b) in the width direction of the electronic device, and
wherein the second blocking member (3812a) of the first blocking mechanism (381a) and the second blocking member (3812b) of the second blocking mechanism (381b) overlap each other by a first length (L1) in the height direction of the electronic device.

10. The electronic device of claim 1, wherein the first blocking mechanism (381a) and the second blocking mechanism (381b) each further comprises:
a first blocking member (3811a, 3811b) extending in a height direction of the electronic device;
a second blocking member (3812a, 3812b) extending to be longer than the first blocking member (3811a, 3811b) in the height direction of the electronic device;
a third blocking member (3813a, 3813b) extending to be longer than the second blocking member (3812a, 3812b) in the height direction of the electronic device; and
a fourth blocking member (3814a, 3814b) extending to be shorter than the first blocking member (3811a, 3811b) in the height direction of the electronic device,
wherein the third blocking member (3813a) of the first blocking mechanism (381a) is disposed at a position corresponding to the fourth blocking member (3814b) of the second blocking mechanism (381b), and
wherein the fourth blocking member (3814a) of the first blocking mechanism (381a) is disposed at a position corresponding to the third blocking member (3813b) of the second blocking mechanism (381b).

11. The electronic device of claim 10,
wherein the blocking members (3811a, 3812a, 3813a, 3814a) in the first blocking mechanism (381a) are disposed in the order of the first blocking member (3811a), the second blocking member (3812a), the third blocking member (3813a), and the fourth blocking member (3814a) in a width direction of the electronic device,
wherein the blocking members (3812b, 3811b, 3814b, 3813b) in the second blocking mechanism (381b) are disposed in the order of the second blocking member (3812b), the first blocking member (3811b), the fourth blocking member (3814b), and the third blocking member (3813b) in the width direction of the electronic device,
wherein the second blocking member (3812a) of the first blocking mechanism (381a) and the second blocking member (3812b) of the second blocking mechanism (381b) overlap each other by a first length (L1) in the height direction of the electronic device,
wherein the third blocking member (3813a) of the first blocking mechanism (381a) and the third blocking member (3813b) of the second blocking mechanism (381b) overlap each other by a second length (L2) in the height direction of the electronic device, and
wherein the second length (L2) is larger than the first length (L1).

12. A structure for preventing foreign substances, the structure comprising:
a rack gear (340) disposed to be driven to engage with a pinion gear (361);
a rack cover (390) coupled to the rack gear (340); and
a foreign substance blocking mechanism (380) disposed between the rack cover and the rack gear to block foreign substances from entering the rack gear,
wherein the foreign substance blocking mechanism includes a first blocking mechanism (380a) and a second blocking mechanism (380b) disposed at a position corresponding to the first blocking mechanism, and
wherein the first blocking mechanism overlaps with the second blocking mechanism.

13. The structure of claim 12,
wherein the first blocking mechanism (380a) is disposed on one surface of the rack cover (390) facing the rack gear (340) and extends in a direction toward the rack gear (340), and
wherein the second blocking mechanism (380b) is disposed on one surface of the rack gear (340) facing the rack cover (390) and extends in a direction toward the rack cover (390).

14. The structure of claim 12, wherein the first blocking mechanism (380a) and the second blocking mechanism (380b) each comprises:
a plurality of blocking members (381) each of which includes a fiber material and extends in a height direction of the structure;
a fixing plate (382) having one surface on which the plurality of blocking members (381) is disposed; and
a bonding member (383) disposed on the fixing plate (382).

15. The structure of claim 14,
wherein the first blocking mechanism (380a) is bonded to the rack cover (390) by using the bonding member (383),
wherein the second blocking mechanism (380b) is bonded to the rack gear (340) by using the bonding member (383), and
wherein the bonding member (383) comprises a double-sided tape.

## Patentansprüche

1. Elektronische Vorrichtung, umfassend:
ein erstes Gehäuse (370);
ein zweites Gehäuse (320), das verschiebbar mit dem ersten Gehäuse (370) gekoppelt ist;
eine flexible Anzeige (310), die so konfiguriert ist, dass sie eine Größe eines für die Außenseite der elektronischen Vorrichtung sichtbaren Anzeigebereichs basierend auf dem Einschieben oder Herausschieben des zweiten Gehäuses (320) vergrößert oder verkleinert;
einen Antriebsmotor (350), der so angeordnet ist, dass er eine Antriebskraft zum Antrieb des zweiten Gehäuses (320) bereitstellt;
ein Ritzel (361), das mit dem Antriebsmotor (350) gekoppelt ist;
eine Zahnstange (340), die so angeordnet ist, dass sie in das Ritzel (361) eingreift;
eine Zahnabdeckung (390), die mit der Zahnstange (340) gekoppelt ist, und
einen Fremdkörperblockiermechanismus (380), der zwischen der Zahnabdeckung und der Zahnstange angeordnet ist, um zu verhindern, dass Fremdkörper in die Zahnstange gelangen,
wobei der Fremdkörperblockiermechanismus einen ersten Blockiermechanismus (380a) und einen zweiten Blockiermechanismus (380b) beinhaltet, der an einer dem ersten Blockiermechanismus entsprechenden Position angeordnet ist, und
wobei sich der erste Blockiermechanismus mit dem zweiten Blockiermechanismus überschneidet.

2. Elektronische Vorrichtung nach Anspruch 1,
wobei der erste Blockiermechanismus (380a) auf einer der Zahnstange (340) zugewandten Fläche der Zahnabdeckung (390) angeordnet ist und sich in Richtung der Zahnstange (340) erstreckt, und
wobei der zweite Blockiermechanismus (380b) auf einer der Zahnabdeckung (390) zugewandten Fläche der Zahnstange (340) angeordnet ist und sich in Richtung der Zahnabdeckung (390) erstreckt.

3. Elektronische Vorrichtung nach Anspruch 1, wobei der erste Blockiermechanismus (380a) und der zweite Blockiermechanismus (380b) jeweils Folgendes umfassen:
eine Vielzahl von Blockierungselementen (381), von denen jedes ein Fasermaterial umfasst und sich in einer Höhenrichtung der elektronischen Vorrichtung erstreckt;
eine Befestigungsplatte (382) mit einer Fläche, auf der die Vielzahl von Blockierungselementen (381) angeordnet ist; und
ein Verbindungselement (383), das auf der Befestigungsplatte (382) angeordnet ist.

4. Elektronische Vorrichtung nach Anspruch 3,
wobei der erste Blockiermechanismus (380a) unter Verwendung des Verbindungselements (383) mit der Zahnabdeckung (390) verbunden ist,
wobei der zweite Blockiermechanismus (380b) unter Verwendung des Verbindungselements (383) mit der Zahnstange (340) verbunden ist, und
wobei das Verbindungselement (383) ein doppelseitiges Band umfasst.

5. Elektronische Vorrichtung nach Anspruch 1, wobei der erste Blockiermechanismus (380a) und der zweite Blockiermechanismus (380b) jeweils Folgendes umfassen:
eine Vielzahl von Blockierungselementen (381a, 381b), von denen jedes ein Fasermaterial umfasst und sich in einer Höhenrichtung der elektronischen Vorrichtung erstreckt; und
eine Befestigungsplatte (382a, 382b) mit einer Fläche, auf der die Vielzahl von Blockierungselementen (381a, 381b) angeordnet ist, und
wobei jedes der Vielzahl von Blockierungselementen (381a, 381b) einen Befestigungsbereich (Fa, Fb) umfasst, der zumindest teilweise an der Befestigungsplatte (382a, 382b) befestigt ist.

6. Elektronische Vorrichtung nach Anspruch 1, wobei der erste Blockiermechanismus (381a) und der zweite Blockiermechanismus (381b) jeweils Folgendes umfassen:
ein erstes Blockierungselement (3811a, 3811b), das sich in einer Höhenrichtung der elektronischen Vorrichtung erstreckt; und
ein zweites Blockierungselement (3812a, 3812b), das sich so erstreckt, dass es in der Höhenrichtung der elektronischen Vorrichtung länger ist als das erste Blockierungselement (3811a, 3811b),
wobei das erste Blockierungselement (3811a) des ersten Blockiermechanismus (380a) an einer Position angeordnet ist, die dem zweiten Blockierungselement (3812b) des zweiten Blockiermechanismus (380b) entspricht, und
wobei das zweite Blockierungselement (3812a) des ersten Blockiermechanismus (380a) an einer Position positioniert ist, die dem ersten Blockierungselement (3811b) des zweiten Blockiermechanismus (380b) entspricht.

7. Elektronische Vorrichtung nach Anspruch 1, wobei der erste Blockiermechanismus (381a) und der zweite Blockiermechanismus (381b) jeweils Folgendes umfassen:
ein erstes Blockierungselement (3811a, 3811b), das sich in einer Höhenrichtung der elektronischen Vorrichtung erstreckt; und
ein zweites Blockierungselement (3812a, 3812b), das sich so erstreckt, dass es in der Höhenrichtung der elektronischen Vorrichtung länger ist als das erste Blockierungselement (3811a, 3811b), und
wobei das erste Blockierungselement (3811a, 3811b) und das zweite Blockierungselement (3812a, 3812b) abwechselnd in der Längsrichtung der elektronischen Vorrichtung angeordnet sind.

8. Elektronische Vorrichtung nach Anspruch 1, wobei der erste Blockiermechanismus (381a) und der zweite Blockiermechanismus (381b) jeweils Folgendes umfassen:
ein erstes Blockierungselement (3811a, 3811b), das sich in einer Höhenrichtung der elektronischen Vorrichtung erstreckt; und
ein zweites Blockierungselement (3812a, 3812b), das sich so erstreckt, dass es in der Höhenrichtung der elektronischen Vorrichtung länger ist als das erste Blockierungselement (3811a, 3811b),
wobei die Blockierungselemente (3811a, 3812a) in dem ersten Blockiermechanismus (381a) in einer Breitenrichtung der elektronischen Vorrichtung in der Reihenfolge des ersten Blockierungselements (3811a) und des zweiten Blockierungselements (3812a) angeordnet sind,
wobei die Blockierungselemente (3812b, 3811b) in dem zweiten Blockiermechanismus (381b) in der Breitenrichtung der elektronischen Vorrichtung in der Reihenfolge des zweiten Blockierungselements (3812b) und des ersten Blockierungselements (3811b) angeordnet sind, und
wobei das zweite Blockierungselement (3812a) des ersten Blockiermechanismus (381a) und das zweite Blockierungselement (3812b) des zweiten Blockiermechanismus (381b) einander um eine erste Länge (L1) in der Höhenrichtung der elektronischen Vorrichtung überlappen.

9. Elektronische Vorrichtung nach Anspruch 1, wobei der erste Blockiermechanismus (381a) und der zweite Blockiermechanismus (381b) jeweils Folgendes umfassen:
ein erstes Blockierungselement (3811a, 3811b), das sich in einer Höhenrichtung der elektronischen Vorrichtung erstreckt; und
ein zweites Blockierungselement (3812a, 3812b), das sich so erstreckt, dass es in der Höhenrichtung der elektronischen Vorrichtung länger ist als das erste Blockierungselement,
wobei die Blockierungselemente (3811a, 3812a) in dem ersten Blockiermechanismus (381a) abwechselnd in der Reihenfolge des ersten Blockierungselements (3811a), des zweiten Blockierungselements (3812a), des ersten Blockierungselements (3811a) und des zweiten Blockierungselements (3812a) in einer Breitenrichtung der elektronischen Vorrichtung angeordnet sind,
wobei die Blockierungselemente (3812b, 3811b) in dem zweiten Blockiermechanismus (381b) abwechselnd in der Reihenfolge des zweiten Blockierungselements (3812b), des ersten Blockierungselements (3811b), des zweiten Blockierungselements (3812b) und des ersten Blockierungselements (3811b) in der Breitenrichtung der elektronischen Vorrichtung angeordnet sind, und
wobei das zweite Blockierungselement (3812a) des ersten Blockiermechanismus (381a) und das zweite Blockierungselement (3812b) des zweiten Blockiermechanismus (381b) einander um eine erste Länge (L1) in der Höhenrichtung der elektronischen Vorrichtung überlappen.

10. Elektronische Vorrichtung nach Anspruch 1, wobei der erste Blockiermechanismus (381a) und der zweite Blockiermechanismus (381b) jeweils ferner Folgendes umfassen:
ein erstes Blockierungselement (3811a, 3811b), das sich in einer Höhenrichtung der elektronischen Vorrichtung erstreckt;
ein zweites Blockierungselement (3812a, 3812b), das sich so erstreckt, dass es in der Höhenrichtung der elektronischen Vorrichtung länger ist als das erste Blockierungselement (3811a, 3811b);
ein drittes Blockierungselement (3813a, 3813b), das sich so erstreckt, dass es in der Höhenrichtung der elektronischen Vorrichtung länger ist als das zweite Blockierungselement (3812a, 3812b), und
ein viertes Blockierungselement (3814a, 3814b), das sich so erstreckt, dass es in der Höhenrichtung der elektronischen Vorrichtung kürzer ist als das erste Blockierungselement (3811a, 3811b),
wobei das dritte Blockierungselement (3813a) des ersten Blockiermechanismus (381a) an einer Position angeordnet ist, die dem vierten Blockierungselement (3814b) des zweiten Blockiermechanismus (381b) entspricht, und
wobei das vierte Blockierungselement (3814a) des ersten Blockiermechanismus (381a) an einer Position positioniert ist, die dem dritten Blockierungselement (3813b) des zweiten Blockiermechanismus (381b) entspricht.

11. Elektronische Vorrichtung nach Anspruch 10,
wobei die Blockierungselemente (3811a, 3812a, 3813a, 3814a) in dem ersten Blockiermechanismus (381a) in der Reihenfolge des ersten Blockierungselements (3811a), des zweiten Blockierungselements (3812a), des dritten Blockierungselements (3813a) und des vierten Blockierungselements (3814a) in einer Breitenrichtung der elektronischen Vorrichtung angeordnet sind,
wobei die Blockierungselemente (3812b, 3811b, 3814b, 3813b) in dem zweiten Blockiermechanismus (381b) in der Reihenfolge des zweiten Blockierungselements (3812b), des ersten Blockierungselements (3811b), des vierten Blockierungselements (3814b) und des dritten Blockierungselements (3813b) in der Breitenrichtung der elektronischen Vorrichtung angeordnet sind,
wobei das zweite Blockierungselement (3812a) des ersten Blockiermechanismus (381a) und das zweite Blockierungselement (3812b) des zweiten Blockiermechanismus (381b) einander um eine erste Länge (L1) in der Höhenrichtung der elektronischen Vorrichtung überlappen,
wobei das dritte Blockierungselement (3813a) des ersten Blockiermechanismus (381a) und das dritte Blockierungselement (3813b) des zweiten Blockiermechanismus (381b) einander um eine zweite Länge (L2) in der Höhenrichtung der elektronischen Vorrichtung überlappen, und
wobei die zweite Länge (L2) größer ist als die erste Länge (L1).

12. Struktur zur Verhinderung von Fremdkörpern, wobei die Struktur Folgendes umfasst:
eine Zahnstange (340), die so angeordnet ist, dass sie in ein Ritzel (361) eingreift;
eine Zahnabdeckung (390), die mit der Zahnstange (340) gekoppelt ist; und
einen Fremdkörperblockiermechanismus (380), der zwischen der Zahnabdeckung und der Zahnstange angeordnet ist, um zu verhindern, dass Fremdkörper in die Zahnstange gelangen,
wobei der Fremdkörperblockiermechanismus einen ersten Blockiermechanismus (380a) und einen zweiten Blockiermechanismus (380b) beinhaltet, der an einer dem ersten Blockiermechanismus entsprechenden Position angeordnet ist, und
wobei sich der erste Blockiermechanismus mit dem zweiten Blockiermechanismus überschneidet.

13. Struktur nach Anspruch 12,
wobei der erste Blockiermechanismus (380a) auf einer der Zahnstange (340) zugewandten Fläche der Zahnabdeckung (390) angeordnet ist und sich in Richtung der Zahnstange (340) erstreckt, und
wobei der zweite Blockiermechanismus (380b) auf einer der Zahnabdeckung (390) zugewandten Fläche der Zahnstange (340) angeordnet ist und sich in Richtung der Zahnabdeckung (390) erstreckt.

14. Struktur nach Anspruch 12, wobei der erste Blockiermechanismus (380a) und der zweite Blockiermechanismus (380b) jeweils Folgendes umfassen:
eine Vielzahl von Blockierungselementen (381), von denen jedes ein Fasermaterial umfasst und sich in einer Höhenrichtung der Struktur erstreckt;
eine Befestigungsplatte (382) mit einer Fläche, auf der die Vielzahl von Blockierungselementen (381) angeordnet ist; und
ein Verbindungselement (383), das auf der Befestigungsplatte (382) angeordnet ist.

15. Struktur nach Anspruch 14,
wobei der erste Blockiermechanismus (380a) unter Verwendung des Verbindungselements (383) mit der Zahnabdeckung (390) verbunden ist,
wobei der zweite Blockiermechanismus (380b) unter Verwendung des Verbindungselements (383) mit der Zahnstange (340) verbunden ist, und
wobei das Verbindungselement (383) ein doppelseitiges Band umfasst.

## Revendications

1. Dispositif électronique, comprenant :
un premier boîtier (370) ;
un deuxième boîtier (320) couplé de manière coulissante au premier boîtier (370) ;
un affichage flexible (310) configuré pour étendre ou réduire une taille d'une zone d'affichage visible à l'extérieur du dispositif électronique en se basant sur le glissement à l'intérieur ou à l'extérieur du second boîtier (320) ;
un moteur d'entraînement (350) disposé de manière à fournir une force motrice pour entraîner le second boîtier (320) ;
un pignon (361) couplé au moteur d'entraînement (350) ;
un engrenage à crémaillère (340) disposé de manière à être entraîné pour s'engager avec le pignon (361) ;
un couvercle de crémaillère (390) couplé à l'engrenage de crémaillère (340), et
un mécanisme de blocage de substances étrangères (380) disposé entre le couvercle de crémaillère et l'engrenage à crémaillère pour empêcher les substances étrangères de pénétrer dans l'engrenage à crémaillère,
dans lequel le mécanisme de blocage de substances étrangères comprend un premier mécanisme de blocage (380a) et un second mécanisme de blocage (380b) disposé à un niveau correspondant au premier mécanisme de blocage, et
dans lequel le premier mécanisme de blocage chevauche le second mécanisme de blocage.

2. Dispositif électronique de la revendication 1,
dans lequel le premier mécanisme de blocage (380a) est disposé sur une surface du couvercle de crémaillère (390) faisant face à l'engrenage à crémaillère (340) et s'étend dans une direction vers l'engrenage à crémaillère (340), et
dans lequel le second mécanisme de blocage (380b) est disposé sur une surface de l'engrenage à crémaillère (340) faisant face au couvercle de crémaillère (390) et s'étend dans une direction vers le couvercle de crémaillère (390).

3. Dispositif électronique de la revendication 1, dans lequel le premier mécanisme de blocage (380a) et le second mécanisme de blocage (380b) comprennent chacun :
une pluralité d'éléments de blocage (381) dont chacun comprend un matériau fibreux et s'étend dans une direction de hauteur du dispositif électronique ;
une plaque de fixation (382) comportant une surface sur laquelle est disposée la pluralité d'éléments de blocage (381) ; et
un élément de liaison (383) disposé sur la plaque de fixation (382).

4. Dispositif électronique de la revendication 3,
dans lequel le premier mécanisme de blocage (380a) est lié au couvercle de crémaillère (390) à l'aide de l'élément de liaison (383),
dans lequel le second mécanisme de blocage (380b) est lié à l'engrenage à crémaillère (340) à l'aide de l'élément de liaison (383), et
dans lequel l'élément de liaison (383) comprend une bande double face.

5. Dispositif électronique de la revendication 1, dans lequel le premier mécanisme de blocage (380a) et le second mécanisme de blocage (380b) comprennent chacun :
une pluralité d'éléments de blocage (381a, 381b) dont chacun comprend un matériau fibreux et s'étend dans une direction de hauteur du dispositif électronique ; et
une plaque de fixation (382a, 382b) comportant une surface sur laquelle est disposée la pluralité d'éléments de blocage (381a, 381b), et
dans lequel chacun de la pluralité d'éléments de blocage (381a, 381b) comprend une zone de fixation (Fa, Fb) au moins partiellement fixée à la plaque de fixation (382a, 382b).

6. Dispositif électronique de la revendication 1, dans lequel le premier mécanisme de blocage (381a) et le second mécanisme de blocage (381b) comprennent chacun :
un premier élément de blocage (3811a, 3811b) s'étendant dans une direction de hauteur du dispositif électronique ; et
un second élément de blocage (3812a, 3812b) s'étendant de manière à être plus long que le premier élément de blocage (3811a, 3811b) dans la direction de hauteur du dispositif électronique,
dans lequel le premier élément de blocage (3811a) du premier mécanisme de blocage (380a) est disposé à un niveau correspondant au second élément de blocage (3812b) du second mécanisme de blocage (380b), et
dans lequel le second élément de blocage (3812a) du premier mécanisme de blocage (380a) est disposé à un niveau correspondant au premier élément de blocage (3811b) du second mécanisme de blocage (380b).

7. Dispositif électronique de la revendication 1, dans lequel le premier mécanisme de blocage (381a) et le second mécanisme de blocage (381b) comprennent chacun :
un premier élément de blocage (3811a, 3811b) s'étendant dans une direction de hauteur du dispositif électronique ; et
un second élément de blocage (3812a, 3812b) s'étendant de manière à être plus long que le premier élément de blocage (3811a, 3811b) dans la direction de hauteur du dispositif électronique, et
dans lequel le premier élément de blocage (3811a, 3811b) et le second élément de blocage (3812a, 3812b) sont disposés alternativement dans la direction longitudinale du dispositif électronique.

8. Dispositif électronique de la revendication 1, dans lequel le premier mécanisme de blocage (381a) et le second mécanisme de blocage (381b) comprennent chacun :
un premier élément de blocage (3811a, 3811b) s'étendant dans une direction de hauteur du dispositif électronique ; et
un second élément de blocage (3812a, 3812b) s'étendant de manière à être plus long que le premier élément de blocage (3811a, 3811b) dans la direction de hauteur du dispositif électronique,
dans lequel les éléments de blocage (3811a, 3812a) du premier mécanisme de blocage (381a) sont disposés dans une direction de largeur du dispositif électronique dans l'ordre du premier élément de blocage (3811a) et du second élément de blocage (3812a),
dans lequel les éléments de blocage (3812b, 3811b) du second mécanisme de blocage (381b) sont disposés dans la direction de largeur du dispositif électronique dans l'ordre du second élément de blocage (3812b) et du premier élément de blocage (3811b), et
dans lequel le second élément de blocage (3812a) du premier mécanisme de blocage (381a) et le second élément de blocage (3812b) du second mécanisme de blocage (381b) se chevauchent mutuellement sur une première longueur (L1) dans la direction de hauteur du dispositif électronique.

9. Dispositif électronique de la revendication 1, dans lequel le premier mécanisme de blocage (381a) et le second mécanisme de blocage (381b) comprennent chacun :
un premier élément de blocage (3811a, 3811b) s'étendant dans une direction de hauteur du dispositif électronique ; et
un second élément de blocage (3812a, 3812b) s'étendant de manière à être plus long que le premier élément de blocage dans la direction de hauteur du dispositif électronique,
dans lequel les éléments de blocage (3811a, 3812a) du premier mécanisme de blocage (381a) sont disposés alternativement dans l'ordre du premier élément de blocage (3811a), du second élément de blocage (3812a), du premier élément de blocage (3811a) et du second élément de blocage (3812a) dans une direction de largeur du dispositif électronique,
dans lequel les éléments de blocage (3812b, 3811b) du second mécanisme de blocage (381b) sont disposés alternativement dans l'ordre du second élément de blocage (3812b), du premier élément de blocage (3811b), du second élément de blocage (3812b) et du premier élément de blocage (3811b) dans la direction de largeur du dispositif électronique, et
dans lequel le second élément de blocage (3812a) du premier mécanisme de blocage (381a) et le second élément de blocage (3812b) du second mécanisme de blocage (381b) se chevauchent mutuellement sur une première longueur (L1) dans la direction de hauteur du dispositif électronique.

10. Dispositif électronique de la revendication 1, dans lequel le premier mécanisme de blocage (381a) et le second mécanisme de blocage (381b) comprennent chacun en outre :
un premier élément de blocage (3811a, 3811b) s'étendant dans une direction de hauteur du dispositif électronique ;
un second élément de blocage (3812a, 3812b) s'étendant de manière à être plus long que le premier élément de blocage (3811a, 3811b) dans la direction de hauteur du dispositif électronique ;
un troisième élément de blocage (3813a, 3813b) s'étendant de manière à être plus long que le second élément de blocage (3812a, 3812b) dans la direction de hauteur du dispositif électronique ; et
un quatrième élément de blocage (3814a, 3814b) s'étendant de manière à être plus court que le premier élément de blocage (3811a, 3811b) dans la direction de hauteur du dispositif électronique,
dans lequel le troisième élément de blocage (3813a) du premier mécanisme de blocage (381a) est disposé à un niveau correspondant au quatrième élément de blocage (3814b) du second mécanisme de blocage (381b), et
dans lequel le quatrième élément de blocage (3814a) du premier mécanisme de blocage (381a) est disposé à un niveau correspondant au troisième élément de blocage (3813b) du second mécanisme de blocage (381b).

11. Dispositif électronique de la revendication 10,
dans lequel les éléments de blocage (3811a, 3812a, 3813a, 3814a) du premier mécanisme de blocage (381a) sont disposés dans l'ordre du premier élément de blocage (3811a), du second élément de blocage (3812a), du troisième élément de blocage (3813a) et du quatrième élément de blocage (3814a) dans une direction de largeur du dispositif électronique,
dans lequel les éléments de blocage (3812b, 3811b, 3814b, 3813b) du second mécanisme de blocage (381b) sont disposés dans l'ordre du second élément de blocage (3812b), du premier élément de blocage (3811b), du quatrième élément de blocage (3814b) et du troisième élément de blocage (3813b) dans la direction de largeur du dispositif électronique,
dans lequel le second élément de blocage (3812a) du premier mécanisme de blocage (381a) et le second élément de blocage (3812b) du second mécanisme de blocage (381b) se chevauchent mutuellement sur une première longueur (L1) dans la direction de hauteur du dispositif électronique,
dans lequel le troisième élément de blocage (3813a) du premier mécanisme de blocage (381a) et le troisième élément de blocage (3813b) du second mécanisme de blocage (381b) se chevauchent mutuellement sur une seconde longueur (L2) dans la direction de hauteur du dispositif électronique, et
dans lequel la seconde longueur (L2) est plus grande que la première longueur (L1).

12. Structure pour empêcher les substances étrangères, la structure comprenant :
un engrenage à crémaillère (340) disposé de manière à être entraîné pour s'engager avec un pignon (361) ;
un couvercle de crémaillère (390) couplé à l'engrenage de crémaillère (340) ; et
un mécanisme de blocage de substances étrangères (380) disposé entre le couvercle de crémaillère et l'engrenage à crémaillère pour empêcher les substances étrangères de pénétrer dans l'engrenage à crémaillère,
dans laquelle le mécanisme de blocage de substances étrangères comprend un premier mécanisme de blocage (380a) et un second mécanisme de blocage (380b) disposé à un niveau correspondant au premier mécanisme de blocage, et
dans laquelle le premier mécanisme de blocage chevauche le second mécanisme de blocage.

13. Structure de la revendication 12,
dans laquelle le premier mécanisme de blocage (380a) est disposé sur une surface du couvercle de crémaillère (390) faisant face à l'engrenage à crémaillère (340) et s'étend dans une direction vers l'engrenage à crémaillère (340), et
dans laquelle le second mécanisme de blocage (380b) est disposé sur une surface de l'engrenage à crémaillère (340) faisant face au couvercle de crémaillère (390) et s'étend dans une direction vers le couvercle de crémaillère (390).

14. Structure de la revendication 12, dans laquelle le premier mécanisme de blocage (380a) et le second mécanisme de blocage (380b) comprennent chacun :
une pluralité d'éléments de blocage (381) dont chacun comprend un matériau fibreux et s'étend dans une direction de hauteur de la structure ;
une plaque de fixation (382) comportant une surface sur laquelle est disposée la pluralité d'éléments de blocage (381) ; et
un élément de liaison (383) disposé sur la plaque de fixation (382).

15. Structure de la revendication 14,
dans laquelle le premier mécanisme de blocage (380a) est lié au couvercle de crémaillère (390) à l'aide de l'élément de liaison (383),
dans laquelle le second mécanisme de blocage (380b) est lié à l'engrenage à crémaillère (340) à l'aide de l'élément de liaison (383), et
dans laquelle l'élément de liaison (383) comprend une bande double face.
